# EUROPEAN PATENT APPLICATION

(11) **EP 2 541 668 A1**
(43) Date of publication of application: **02.01.2013**
(21) Application number: 12004814.5
(22) Date of filing: 27.06.2012
(51) Int. Cl.: H01M 10/50, H01M 2/10

(54) **Power supply device and vehicle including the same**

(30) Priority: 30.06.2011 JP 2011145741
(71) Applicant: Sanyo Electric Co., Ltd., Osaka 570-8677 (JP)
(72) Inventor: Hashimoto, Hiroyuki, Moriguchi-shi Osaka 570-8677 (JP); Tsuchiya, Masaki, Moriguchi-shi Osaka 570-8677 (JP); Asai, Yasuhiro, Moriguchi-shi Osaka 570-8677 (JP); Seto, Takashi, Moriguchi-shi Osaka 570-8677 (JP); Komoriya, Takahide, Moriguchi-shi Osaka 570-8677 (JP)
(74) Representative: Hertz, Oliver

(57) **Abstract**

A power supply device includes a battery assembly (5), a box-shaped cover case (16), a cooling plate (61), and a waterproof sheet (19). The battery assembly (5) includes rectangular battery cells arranged side by side. The cover case (16) has an opening. Exterior surfaces of the battery assembly (5) are covered with surfaces of the cover case (16) other than the opening. The cooling plate (61) is thermally coupled to one surface of the battery assembly (5) through the opening. Coolant flows through the cooling plate (61) whereby transferring heat from the battery assembly (5) to the coolant. The waterproof sheet (19) covers the one surface of the battery assembly (5). Gaps between the battery assembly (5) and the cover case (16) are filled with a sealing material so that a sealing layer (18) is interposed between them. The waterproof sheet (19) is fastened by the sealing layer (18).

## Description

### BACKGROUND OF THE INVENTION

### 1. Field of the Invention

The present invention mainly relates to a power supply device which can be used as large current power supplies for electric motor for driving cars such as hybrid car and electric vehicle, and as electric power storages for home use and manufacturing plants. The present invention also relates to a vehicle including this power supply device.

### 2. Description of the Related Art

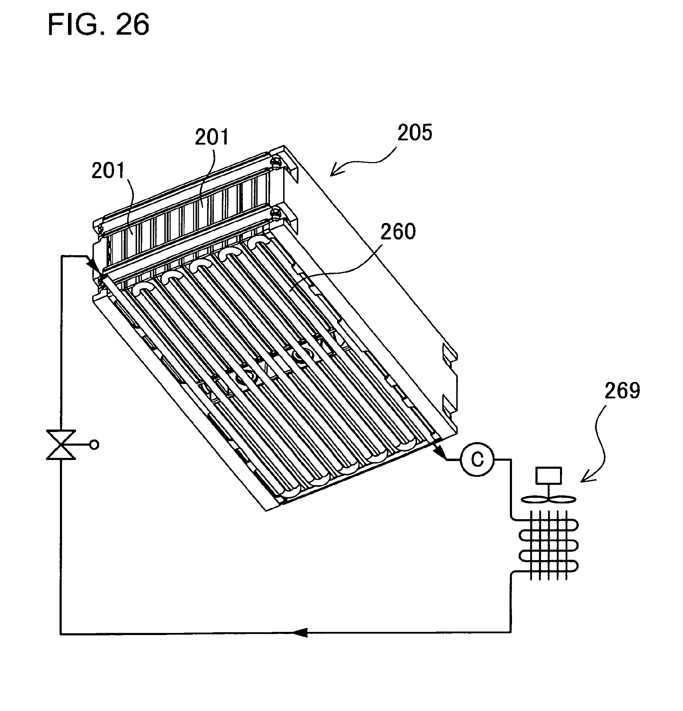

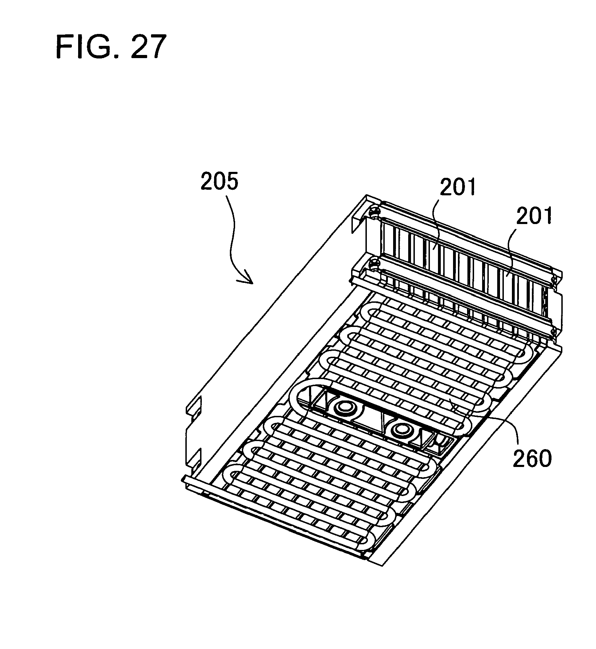

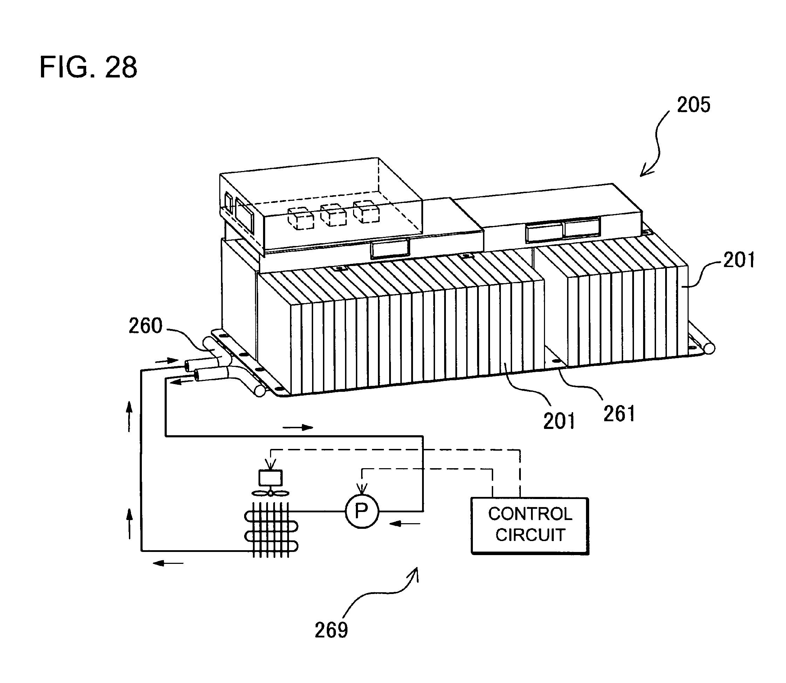

Power supply devices such as battery packs for vehicles are required which can provide high output electric power. A number of battery cells are serially connected to each other to increase the output voltage whereby increasing the output electric power of a power supply device. Battery cells generate heat when charged/discharged with a large current. The heat amount generated by battery cells increases with the number of the battery cells. For this reason, heat dissipating mechanisms are required which can efficiently thermally conduct and dissipate the heat generated by battery cells. To dissipate the heat generated by battery cells, mechanisms have been proposed which blow cooling air to battery cells. Additionally, mechanisms have been proposed which include cooling pipes which are in contact with battery cells and directly cool the battery cells by heat exchange (e.g., see Japanese Patent Laid-Open Publication Nos. 2009-134 901, 2009-134 936, and 2010-15 788).
In the directly cooling mechanisms, coolant is supplied and circulates through the cooling pipes. In these types of battery systems, for example, as shown in Figs. 26 and 27, a cooling pipe 260 can be arranged on the lower surface of a battery assembly 205 including battery cells 201 which are arranged side by side. Coolant circulates through the cooling pipe 260. The cooling pipe 260 is connected to a cooling mechanism 269 so that heat can be transferred from the battery assembly 205 through the cooling pipe 260 or a cooling plate 261 to the cooling mechanism 269. In Fig. 26, longitudinal parts of the cooling pipe 260 extend in a direction perpendicular to the side-by-side arrangement direction of the battery cells 201, which are arranged side by side. In Fig. 27, longitudinal parts of the cooling pipe 260 extend in a direction in parallel to the side-by-side arrangement direction of the battery cells 201, which are arranged side by side. In addition, in Fig. 28, the cooling plate 261 is arranged on the lower surface of the battery assembly 205. The cooling pipe 260 extends in the cooling plate 261. Thus, the heat can be transferred from the battery assembly 205 through the cooling plate 261.

These types of cooling systems can more efficiently transfer the heat generated by the battery cells by the heat exchange through coolant as compared with air-cooling systems, which blow cooling air to parts between battery cells adjacent to each other. On the other hand, high cooling performance will bring cooled part to relatively low temperature, and may bring the cooled part to the dew point. As a result, moisture in air is cooled, which in turn may cause condensation on surfaces of the battery cells. If condensation occurs, electric current may unintentionally flow, or the condensation may cause corrosion.

To prevent this, it can be conceived that the surfaces of battery cells (metal exterior cases) are completely covered by resin, or the like, which keeps air away from the surfaces of the battery cells, whereby preventing moisture contained in air from condensing on surfaces of the battery cells. However, if the peripheral parts of battery cells are completely covered by resin, it will be difficult to thermally couple the battery cells to the cooling plate. In other words, if the peripheral parts of battery cells are completely covered by resin, the battery cells may not be thermally coupled to the cooling plate, which in turn reduces the heat dissipation performance. For this reason, it is necessary to open any of the surfaces (e.g., bottom surface) of the battery assembly to be thermally connected to the cooling plate.

However, in this arrangement, a gap will be produced between the cooling plate and the battery assembly, which in turn will cause incomplete covering. Accordingly, air will come into the gap. As a result, moisture in air cannot be prevented from condensing in a part between the cooling plate and the battery assembly.

Also, see Japanese Publication of Examined Utility Model Application No. S34-16 929, and Japanese Patent Laid-Open Publications Nos. 2005-149 837 and 2002-100 407.

The present invention is aimed at solving the problem. It is a main object of the present invention to provide a power supply device that can thermally couple a battery assembly to a cooling plate and can prevent condensation, and a vehicle including the power supply device.

### SUMMARY OF THE INVENTION

The above objectives are achieved with power supply devices and/or methods comprising the features of the independent claims, respectively. Preferred embodiments of the invention are defined in the dependent claims. Furthermore, the above objectives are achieved with power supply devices and/or methods described in the present description. A power supply device according to a first aspect of the present invention includes a battery assembly 5, a cover case 16, a cooling plate 61, and a sealing member 20. The battery assembly 5 includes a plurality of rectangular battery cells which are arranged side by side. The cover case 16 has a box shape having one opened surface with opening. The battery assembly 5 is covered with surfaces of the cover case 16 other than the opening. The cooling plate 61 closes the one opened surface of the covering case 16, and is arranged to be thermally coupled to the battery assembly 5. Coolant flows through the cooling plate 61 whereby transferring heat from the battery assembly 5 to the coolant. The sealing member 20 is arranged between the covering case 16 and the cooling plate 61 whereby sealing the covering case 16. According to this construction, the battery assembly can be airtightly closed by the cover case and the cooling plate whereby preventing air from flowing into the cover case. Therefore, it is possible to prevent moisture in air from condensing in the cover case.

In a power supply device according to a second aspect of the present invention, a thermally conductive sheet 12 can be further provided which is an electrically insulating but thermally conductive sheet interposed between the cooling plate 61 and the battery assembly 5. According to this construction, it is possible to prevent that a gap is produced between the cooling plate and the battery assembly, and additionally to ensure that the cooling plate and the battery assembly can be thermally coupled to each other.

In a power supply device according to a third aspect of the present invention, the sealing member 20 can be an elastic member. The sealing member 20 can be elastically deformed by press force when being sandwiched between the cooling plate 61 and the cover case 16. According to this construction, the elastic deformation of the sealing member can surely provide a waterproof structure between the cooling plate and the cover case.

In a power supply device according to a fourth aspect of the present invention, the sealing member 20 can have a closed loop shape. The closed loop shape is larger than the exterior shape of the thermally conductive sheet 12. According to this construction, the sealing member is not in contact with the thermally conductive sheet, and can provide a waterproof structure between the cooling plate and the cover case around the thermally conductive sheet.

In a power supply device according to a fifth aspect of the present invention, the closed loop shape of the sealing member 20 can be smaller than the exterior shape of the cooling plate 61. According to this construction, the sealing member can provide a waterproof structure between the cooling plate and the cover case inside the cooling plate around the thermally conductive sheet.

In a power supply device according to a sixth aspect of the present invention, the exterior shape of the thermally conductive sheet 12 can be smaller than the surface of the cooling plate 61. When the thermally conductive sheet 12 is placed on the upper surface of the cooling plate 61, a stair part 62 can be formed on the peripheral part of the upper surface of the cooling plate 61 around the thermally conductive sheet 12. The sealing member 20 can be arranged on the stair part 62. According to this construction, the sealing member can provide a waterproof structure between the cooling plate and the cover case in the stair part formed around the thermally conductive sheet.

In a power supply device according to a seventh aspect of the present invention, a groove 17 can be formed on at least one of the stair part 62 and a part of the cover case 16 to be arranged on the stair part 62, and can hold the elastic member. According to this construction, the sealing member can be led to and positioned at the groove. Therefore, it is possible to provide a reliable waterproof structure.

In a power supply device according to an eighth aspect of the present invention, the sealing member 20 can be an O-ring.

In a power supply device according to a ninth aspect of the present invention, the sealing member 20 can be a sealing plate 20B that is interposed between the thermally conductive sheet 12 and the battery assembly 5. The sealing plate 20B is airtightly fastened to the cover case 16 so that the opening of the cover case 16 is airtightly closed. The cooling plate 61 is fastened onto the exterior-side surface of the sealing plate 20B with the thermally conductive sheet 12 being interposed between the cooling plate 61 and the sealing plate 20B. According to this construction, after the cover case is airtightly closed by the sealing plate, the cooling plate can be secured to the sealing plate. Therefore, high thermal conduction between the battery assembly and the cooling plate can be provided through the sealing plate. In particular, in the case where a member for airtightly closing the cover case is separately provided from a member for cooling the battery assembly, these members can be easily constructed. As a result, these members can separately have sealing function and cooling function. Therefore, this power supply device has structural and manufacturing advantages.

In a power supply device according to a tenth aspect of the present invention, a second thermally conductive sheet 13 can be further provided which is an elastic sheet interposed between the sealing plate 20B and one surface of the battery assembly 5. According to this construction, the gap between the sealing plate and the battery assembly can be provided with the second thermally conductive sheet. Therefore, the second thermally conductive sheet can thermally couple the sealing plate to the battery assembly.

In a power supply device according to an eleventh aspect of the present invention, the size and the exterior shape of the sealing plate 20B can be designed to match with the opening of the cover case 16. According to this construction, the sealing plate can easily airtightly close the cover case.

In a power supply device according to a twelfth aspect of the present invention, the sealing plate 20B can be a metal plate. According to this construction, since the interposed metal sealing plate will not reduce thermal conductivity, the heat can be efficiently dissipated from the battery assembly through the cooling plate.

In a power supply device according to a thirteenth aspect of the present invention, a sealing material can be applied between the battery assembly 5 and the cover case 16. According to this construction, the periphery of the battery assembly can be completely closed so that any gap cannot be formed. Therefore, it is possible to eliminate physical space into which air comes. In other words, it is possible to eliminate physical space where moisture in air condenses.

A vehicle according to a fourteenth aspect of the present invention includes the aforementioned power supply device.
The above and further objects of the present invention as well as the features thereof will become more apparent from the following detailed description to be made in conjunction with the accompanying drawings.

### BRIEF DESCRIPTION OF THE DRAWINGS

Fig. 1 is an exploded perspective view showing a power supply device according to a first embodiment of the present invention;
Fig. 2 is a perspective view showing a battery assembly included in the power supply device shown in Fig. 1;
Fig. 3 is an exploded perspective view showing the battery assembly shown in Fig. 2 with a cooling plate being removed from the battery assembly;
Fig. 4 is a perspective view showing the battery assembly shown in Fig. 2 as viewed from the lower side;
Fig. 5 is an exploded perspective view showing the battery assembly shown in Fig. 2;
Fig. 6 is an exploded perspective view showing the battery assembly shown in Fig. 5;
Fig. 7 is a cross-sectional view showing a power supply device according to a modified embodiment;
Fig. 8 is a schematic cross-sectional view showing an exemplary power supply device which includes a water-absorbing sheet attached to a battery assembly;
Fig. 9 is an exploded cross-sectional view showing the power supply device shown in Fig. 8;
Fig. 10 is an exploded perspective view showing an exemplary power supply device which includes a sealing member between a battery assembly and a cooling plate;
Fig. 11 is an exploded perspective view showing the battery assembly shown in Fig. 10 as viewed from the lower side;
Fig. 12 is an enlarged perspective view showing a part of the battery assembly shown in Fig. 11 where the sealing member is attached;
Fig. 13 is an enlarged perspective view showing the part of the battery assembly with the sealing member being removed from the battery assembly shown in Fig. 12;
Fig. 14 is a schematic cross-sectional view showing a power supply device according to a second embodiment which includes a water-absorbing sheet attached to a battery assembly;
Fig. 15 is a cross-sectional view showing a power supply device according to a third embodiment;
Fig. 16 is a cross-sectional view showing the power supply device shown in Fig. 14 in an assembling process;
Fig. 17 is an exploded cross-sectional view showing a process where a thermally conductive sheet and a cooling plate are attached to the power supply device shown in Fig. 16;
Fig. 18 is a cross-sectional view showing a power supply device according to a fourth embodiment;
Fig. 19 is an exploded cross-sectional view showing the power supply device shown in Fig. 18;
Fig. 20 is a schematic plan view showing the arrangement of cooling plates;
Fig. 21 is a schematic cross-sectional view showing a battery assembly according to a fifth embodiment which includes cooling pipes arranged on the lower side;
Fig. 22 is a schematic cross-sectional view showing a battery assembly according to a sixth embodiment;
Fig. 23 is a block diagram showing an exemplary hybrid car which is driven by an internal-combustion engine and an electric motor, and includes a power supply device;
Fig. 24 is a block diagram showing an exemplary electric vehicle that is driven only by an electric motor, and includes a power supply device;
Fig. 25 is a block diagram a power storage type power supply device to which the present invention is applied;
Fig. 26 is a perspective view showing a cooling mechanism of a known power supply device.;
Fig. 27 is a perspective view showing a cooling mechanism of another known power supply device; and
Fig. 28 is a perspective view showing a cooling mechanism of still another known power supply device.

### DETAILED DESCRIPTION OF THE EMBODIMENT(S)

The following description will describe embodiments according to the present invention with reference to the drawings. It should be appreciated, however, that the embodiments described below are illustrations of a power supply device and a vehicle including this power supply device to give a concrete form to technical ideas of the invention, and a power supply device and a vehicle including this power supply device of the invention are not specifically limited to description below. Furthermore, it should be appreciated that the members shown in claims attached hereto are not specifically limited to members in the embodiments. Unless otherwise specified, any dimensions, materials, shapes and relative arrangements of the parts described in the embodiments are given as an example and not as a limitation. Additionally, the sizes and the positional relationships of the members in each of drawings are occasionally shown larger exaggeratingly for ease of explanation. Members same as or similar to those of this invention are attached with the same designation and the same reference signs, and their description is omitted. In addition, a plurality of structural elements of the present invention may be configured as a single part that serves the purpose of a plurality of elements, on the other hand, a single structural element may be configured as a plurality of parts that serve the purpose of a single element. Also, the description of some of examples or embodiments may be applied to other examples, embodiments or the like.

### FIRST EMBODIMENT

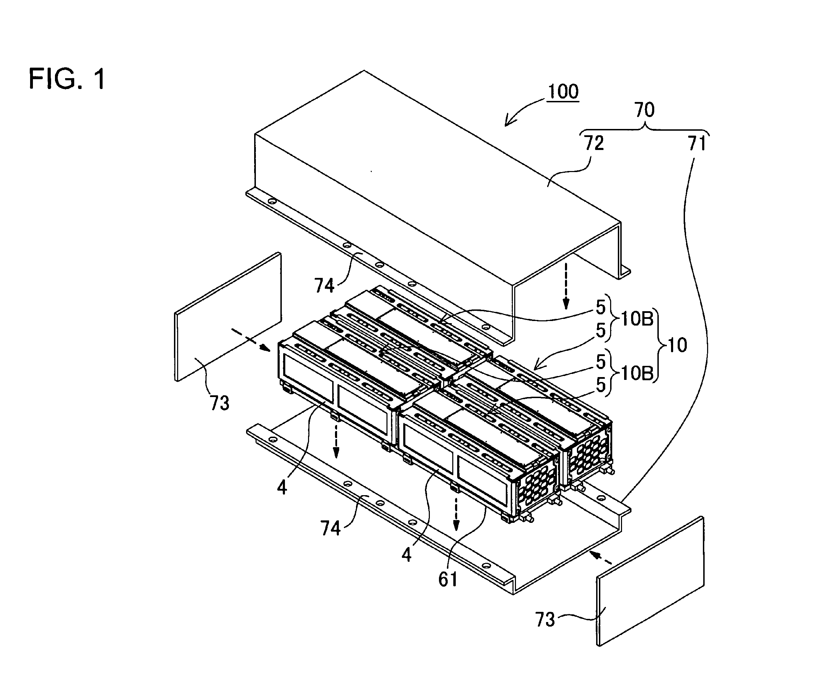

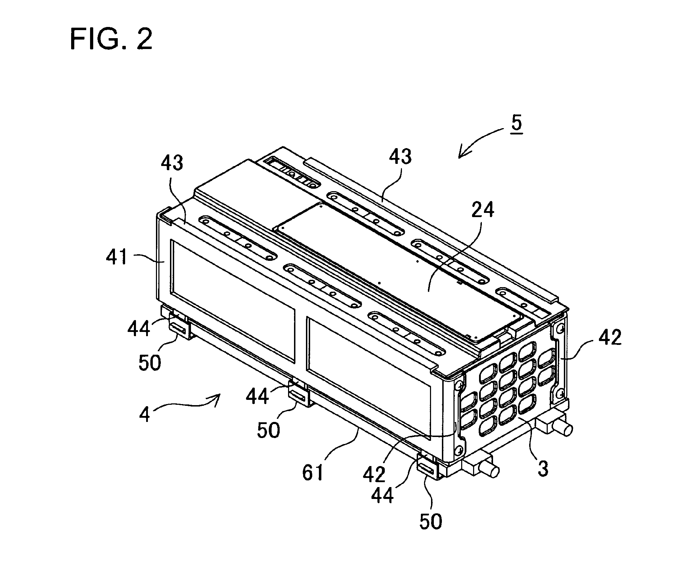

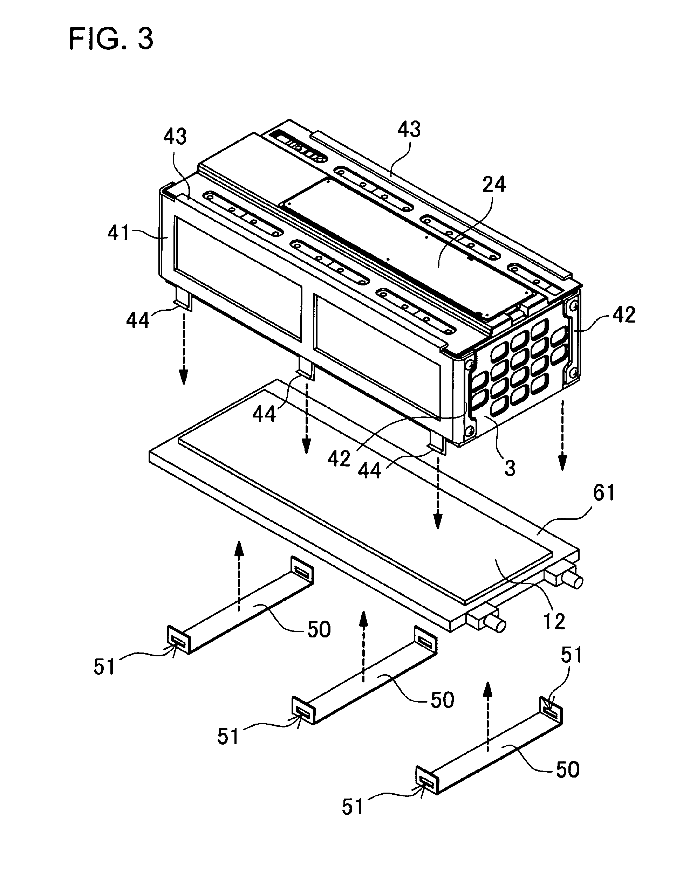

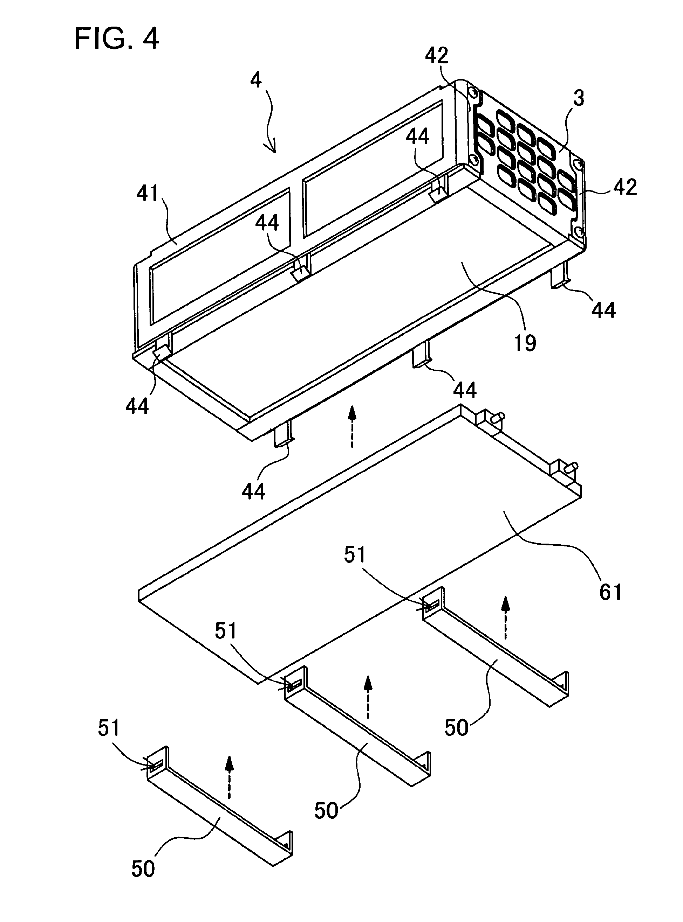

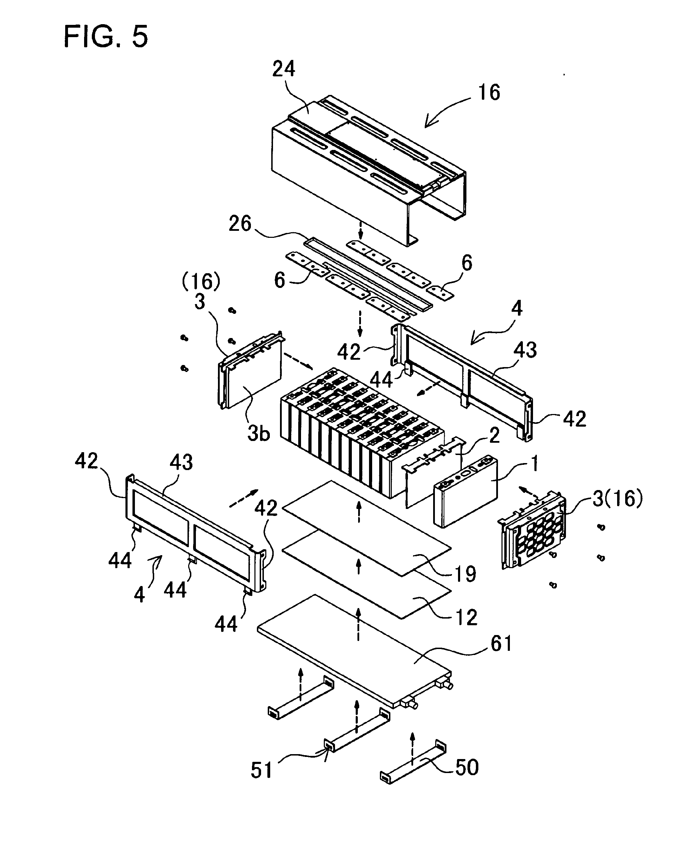

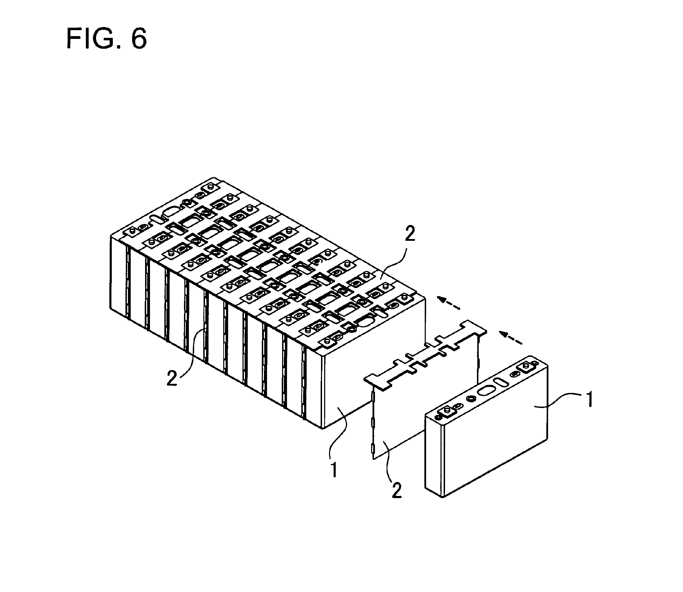

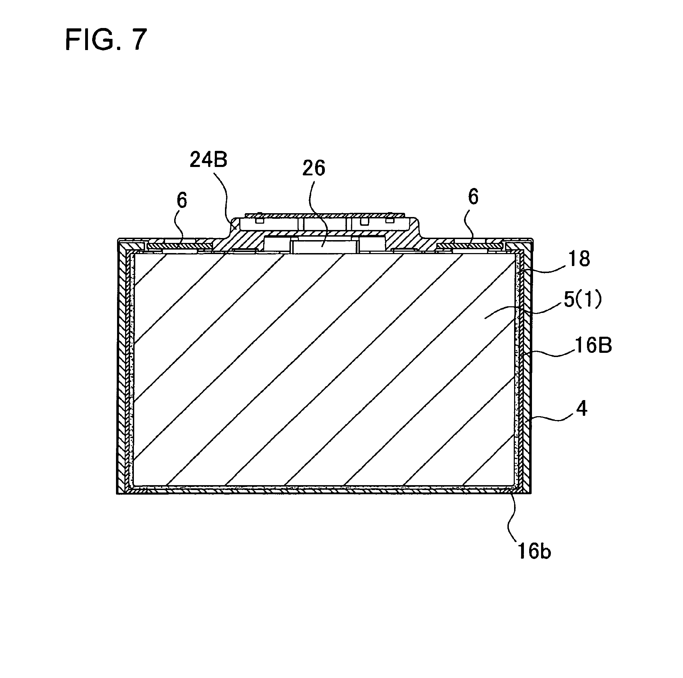

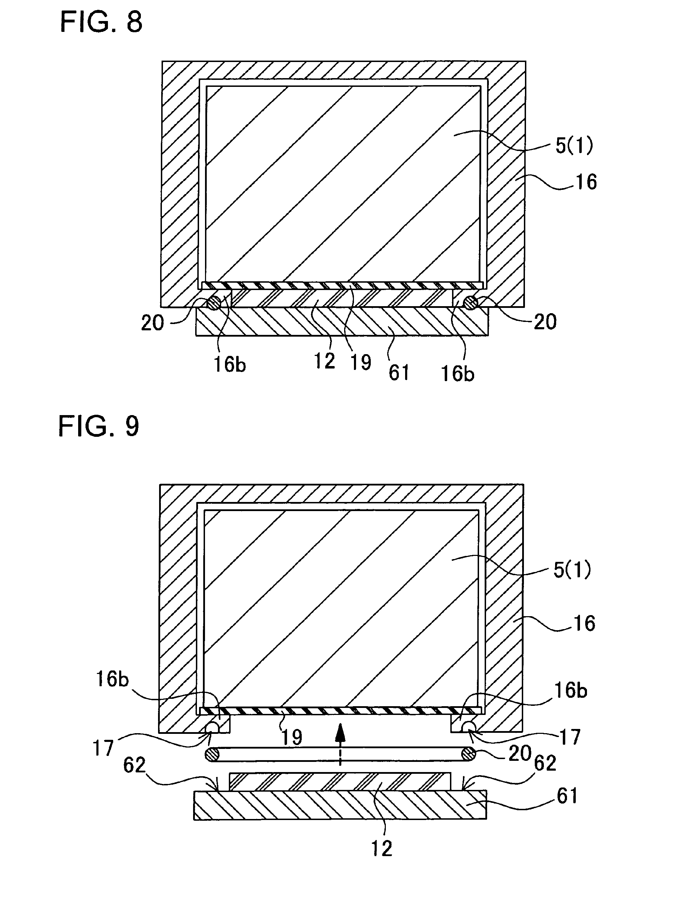

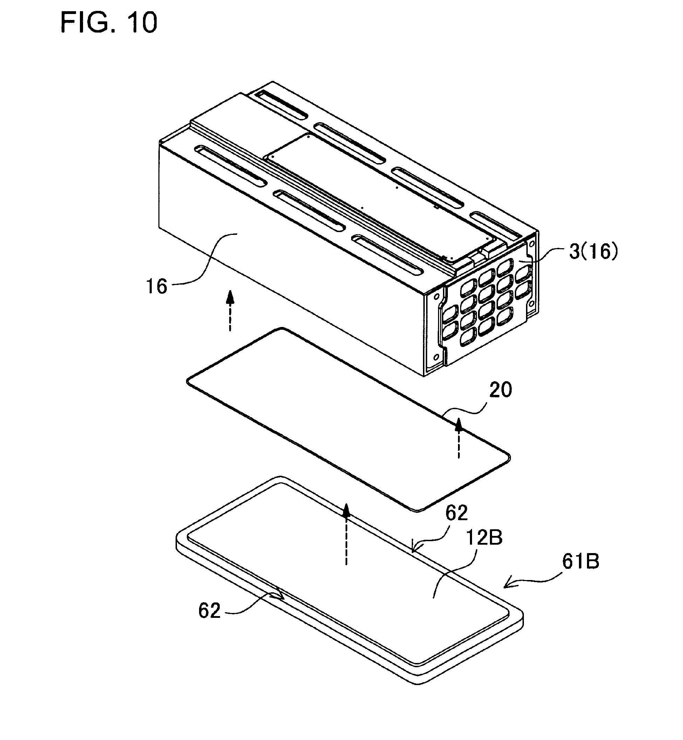

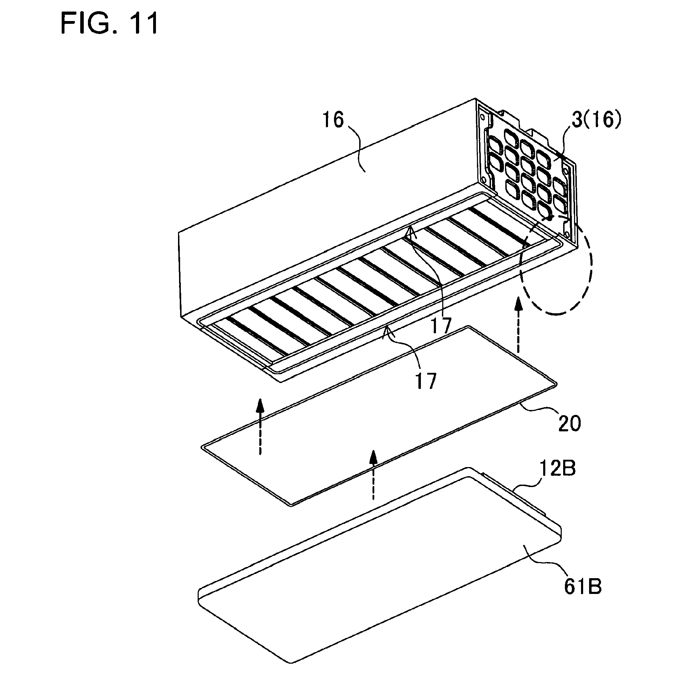

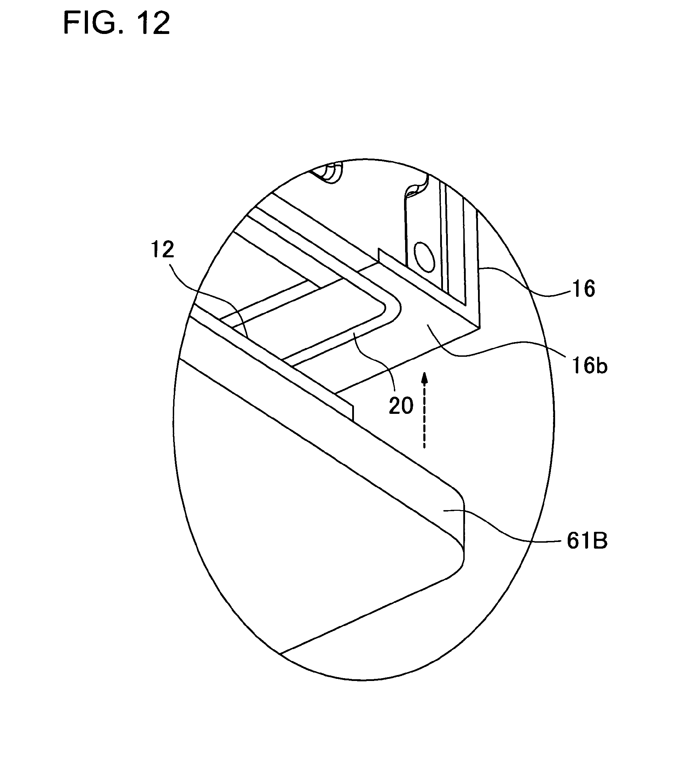

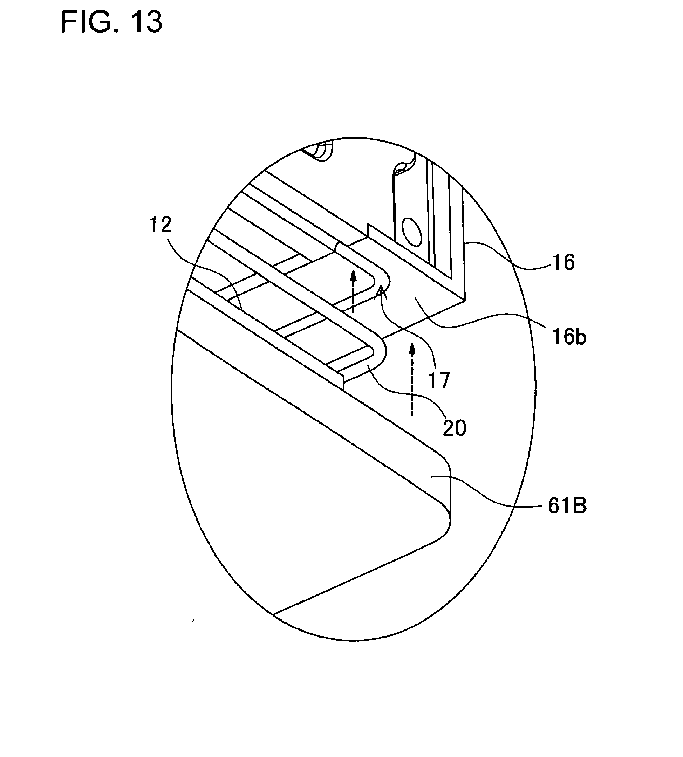

The following description will describe a power supply device 100 according to a first embodiment of the present invention with reference to Figs. 1 to 13. In this embodiment, the present invention is applied to a vehicle power supply device. Fig. 1 is an exploded perspective view showing a power supply device 100. Fig. 2 is a perspective view showing a battery assembly 5 shown in Fig. 1. Fig. 3 is an exploded perspective view showing the battery assembly 5 shown in Fig. 2 with a cooling plate 61 being removed from the battery assembly 5. Fig. 4 is a perspective view showing the battery assembly 5 shown in Fig. 2 as viewed from the lower side. Fig. 5 is an exploded perspective view showing the battery assembly 5 shown in Fig. 2. Fig. 6 is an exploded perspective view showing the battery assembly 5 shown in Fig. 5. Fig. 7 is a cross-sectional view showing a power supply device according to a modified embodiment. Fig. 8 is a schematic cross-sectional view showing an exemplary power supply device which includes a water-absorbing sheet arranged between the battery assembly 5 and a cover case 16. Fig. 9 is an exploded cross-sectional view showing the power supply device shown in Fig. 8. Fig. 10 is an exploded perspective view showing an exemplary power supply device which includes a sealing member 20 between the battery assembly 5 and a cooling plate 61. Fig. 11 is an exploded perspective view showing the battery assembly 5 shown in Fig. 10 as viewed from the lower side. Fig. 12 is an enlarged perspective view showing a part of the battery assembly 5 shown in Fig. 11 where the sealing member 20 is attached. Fig. 13 is an enlarged perspective view showing the part of the battery assembly 5 with the sealing member 20 being removed from the battery assembly 5 shown in Fig. 12. The power supply device 100 can be mainly installed on an electric vehicle such as hybrid car and electric vehicle, and is used as a power supply which supplies electric power to an electric motor of the electric vehicle whereby driving the electric vehicle. However, the power supply device according to the present invention can be used for vehicles other than hybrid car and electric vehicle, and can be also used for applications other than electric vehicle which require high electric power.

### (Power Supply Device 100)

As shown in the exploded perspective view of Fig. 1, the power supply device 100 has a box external shape having a rectangular upper surface. The power supply device 100 has a box-shaped exterior case 70 composed of two parts which accommodates a battery pack 10. The exterior case 70 includes a lower case portion 71, an upper case portion 72, and end surface plates 73 each of which is coupled to the both ends of the lower and upper case portions 71 and 72. Each of the upper and lower case portions 72 and 71 has flange portions 74 which protrude outward. The flange portions 74 of the upper case portion 72 are secured to the flange portions 74 of the lower case portion 71 by bolts and nuts. In the illustrated exterior case 70, the flange portions 74 are arranged along the side surfaces of the exterior case 70. As shown in Fig. 1, the lower case portion 71 accommodates four battery assemblies 5, which are arranged in two rows and two columns. The battery assemblies 5 are fastened to the exterior case 70 in place. Each of the end surface plates 73 is connected to the both ends of the lower and upper case portions 71 and 72 so that the both ends of the exterior case 70 are closed.

### (Battery Pack 10)

The battery pack 10 shown in Fig. 1 includes the four battery assemblies 5. That is, two battery assemblies 5 are arranged in the side-by-side arrangement direction of rectangular battery cells 1 which are arranged side by side, and are coupled to each other so that a linearly coupled battery assembly unit 10B is provided. Two linearly coupled battery assembly unit 10B are arranged in parallel to each other so that the battery pack 10 is provided.

The battery assembly 5 included in the battery pack 10 is shown in the perspective view of Fig. 2. The battery assembly 5 is fastened onto the cooling plate 61 for cooling the battery assembly 5. As shown in Figs. 2 to 5, the battery assembly 5 includes fastening structures for fastening the battery assemblies 5 onto the cooling plate 61 (discussed later in detail).

As shown in Figs. 5 and 6, the battery assembly 5 includes a plurality of rectangular battery cells 1, and electrically insulating separators 2, the cover case 16, a pair of end plates 3, and a plurality of metal fastening members 4. The electrically insulating separators 2 are interposed between the plurality of rectangular battery cells 1, and electrically insulate the plurality of rectangular battery cells 1 from each other. The rectangular battery cells 1 are arranged on the arrangement surfaces of each of the separators. The cover case 16 accommodates the battery assembly 5 with the plurality of rectangular battery cells 1 and the separator 2 being alternately arranged. The pair of end plates 3 are arranged on the side-by-side arrangement directional end surfaces of the battery assembly 5. The plurality of metal fastening members 4 couple the end plates to each other.

### (Battery Assembly 5)

In the battery assembly 5, as shown in Fig. 6, the electrically insulating separators 2 are interposed between the rectangular battery cells 1. As shown in Fig. 5, the pair of end plates 3 are arranged on the both end surfaces of the battery assembly 5. The pair of end plates 3 are coupled to each other by the fastening member 4. The separator 2 is interposed between the arrangement surfaces of the rectangular battery cells 1 whereby electrically insulating the rectangular battery cell 1 adjacent to each other from each other. Thus, the rectangular battery cells 1 and the separators 2 are arranged alternately so that the battery assembly 5 is provided.

### (Rectangular Battery Cell 1)

As shown in Fig. 6, the rectangular battery cell 1 has a rectangular exterior case which forms the exterior shape of the rectangular battery cell 1. The thickness of the exterior case is smaller than the width. A sealing plate closes an opening of the exterior case. The sealing plate includes positive/negative terminals. A safety valve is arranged between the terminals. The safety valve can open so that the internal gas can be discharged when the internal pressure of the exterior case rises to a predetermined value. If the safety valve opens, it is possible to prevent the pressure rise of the exterior case. A base battery which composes the rectangular battery cell 1 is a rechargeable battery such as lithium ion battery, nickel metal hydride battery, and nickel-cadmium battery. In the case where rechargeable lithium-ion batteries are used as the rectangular battery cells 1, it is possible to increase charge capacity density (per the entire volume or mass of the battery cell). The battery cells used in the present invention are not limited to rectangular battery cells, but can be cylindrical battery cells, or rectangular or any-shaped laminate type batteries covered by laminate materials of exterior members.

When rectangular battery cells 1 are arranged side by side so that the battery assembly 5 is assembled, the positive/negative terminals 13 of the adjacent battery cells 1 are serially connected to each other by the bus bars 6. Since the rectangular battery cells 1 of the battery pack 10 adjacent to each other are serially connected to each other, the output voltage of the battery pack can be high. As a result, the battery pack can provide high electric power. However, the rectangular battery cells of the battery pack adjacent to each other may be connected in parallel to each other. Also, the battery pack may include rectangular battery cell groups each of which is composed of rectangular battery cells connected in series to each other, and the rectangular battery cell groups may be connected in parallel to each other. Alternatively, the battery pack may include rectangular battery cell groups each of which is composed of rectangular battery cells connected in parallel to each other, and the rectangular battery cell groups may be connected in series to each other. The rectangular battery cell 1 includes the metal exterior case. The separator 2 is made of an electrically-insulating material, and interposed between the rectangular battery cells 1. Accordingly, it is possible to prevent that a short circuit occurs between the exterior cases of the adjacent rectangular battery cells 1. The exterior case of the rectangular battery cell may be formed of an electrically insulating material such as plastic. In this case, since the electrically-insulating exterior cases of the rectangular battery cells are not necessarily electrically insulated from each other when being arranged side by side, the separator may be formed of metal or eliminated.

### (Separator 2)

The separators 2 electrically and thermally insulate adjacent rectangular battery cells 1 from each other when the rectangular battery cells 1 are arranged side by side. The separators 2 are formed of an electrically insulating material such as plastic. The separator 2 is interposed between the rectangular battery cells 1 adjacent to each other whereby electrically insulating these adjacent rectangular battery cells 1.

According to this embodiment, the cover case 16 and the rectangular battery cell 1 are electrically insulated from each other. Accordingly, the side surfaces of the separator 2 can be simply designed so that the separator 2 can be small. In other words, as shown in Figs. 5 and 6, since the side surfaces of the battery assembly 5 can be protected by the electrically insulating side surfaces of the cover case 16, the separator 2 is only required to electrically insulate the opposed surfaces of the rectangular battery cells 1 adjacent to each other. That is, the separator is not required to cover the side surfaces of the rectangular battery cells. For this reason, although separators include protruding parts which protrude from the side surfaces of the separator and cover the side surfaces of the battery assembly 5 in the case where the side surfaces of the cover case is not electrically insulative, the separator according to this embodiment does not include these protruding parts. As a result, the separator can be small. Alternatively, the separator can have protruding parts which slightly protrude toward the rounded edges of the rectangular battery cell side surfaces. These protruding parts can hold and position the separator in place. The side surfaces of the separators according to this embodiment can be substantially coplanar with the surface of the rectangular battery cells in the side surfaces of the battery assembly. As a result, the width of the battery assembly can be small. In addition, the separators can have engaging structures which are formed in the upper surfaces of the separators, and are composed of protruding and recessed parts. The engaging structures can position separators in place. The battery cells to be arranged side by side are positioned in place by the protruding parts which are arranged in the side surfaces of the separators according to this embodiment.

Alternatively, the cover case may be entirely formed of metal. In this alternative case, since the side surfaces of the cover case are formed of metal, the separators preferably cover the side surfaces of the rectangular battery cells whereby electrically insulating the rectangular battery cells from each other in the side surfaces of the battery assembly. However, the separators are not necessarily interposed between rectangular battery cells in the battery assembly. For example, in order to eliminate the separators, the exterior case of the rectangular battery cell may be formed of an electrically insulating material. Alternatively, the peripheral parts of the exterior case of the rectangular battery cell may be covered by heat shrinkable tubing, electrically-insulating sheets, electrically-insulating paint, or the like. In order to eliminate the separators, other methods may be used which can electrically insulate the adjacent rectangular battery cells from each other. In this embodiment, the rectangular battery cells are cooled not by forcedly blowing cooling air to flow the cooling air through parts between the rectangular battery cells, but the battery assembly is cooled by using the cooling plate through which coolant or the like is circulated. In particular, in this construction, the separators are not necessarily interposed between rectangular battery cells. Dissimilar to the construction where the rectangular battery cells are cooled by forcedly blowing cooling air to flow the cooling air through parts between the rectangular battery cells, the electrically insulating separators interposed between rectangular battery cells are not required to form air-flowing paths through which cooling air flows in the construction where the battery assembly is cooled by using the cooling plate through which coolant or the like is circulated. For this reason, the rectangular battery cell can be short in length (in the side-by-side arrangement direction). As a result, the battery assembly can be small.

### (End Plate 3)

The pair of end plates 3 are arranged on the both end surfaces of the battery assembly 5 of the rectangular battery cells 1 and the separators 2, which are alternately arranged, as shown in Fig. 5. The battery assembly 5 is interposed between the pair of end plates 3 so that the end plates 3 press the battery assembly 5 from the both sides. The end plates 3 are formed of a sufficiently rigid material such as metal. In addition, the end plates 3 can include fastening structures that fasten the lower case portion 71 shown in Fig. 1 to the end plates 3.

The both end surfaces of the cover case 16 shown in Fig. 5 are opened. However, the cover case is not limited to this. For example, one of the end surfaces of the cover case can previously be closed. In this case, after the battery assembly is inserted from the other opened end surface, one end plate closes this opened end surface so that all of the side surfaces of the cover case can be closed.

### (Fastening Member 4)

As shown in Figs. 2 to 5, the fastening members 4 are arranged on the both side surfaces of the battery assembly 5 with the end plates 3 being attached to the battery assembly 5. When the fastening members 4 are fastened to the pair of end plates 3, the battery assembly 5 is fastened. As shown in the perspective view of Fig. 5, the fastening member 4 includes a main portion 41, bent parts 42, an upper surface holding part 43, and fastening connector parts 44. The main portion 41 covers the side surface of the battery assembly 5. The bent parts 42 are bent on the both ends of the main portion 41, and can be fastened to the end plates 3. The upper surface holding part 43 is bent on the upper edge of the main portion 41, and holds the upper surface of the battery assembly 5. The fastening connector parts 44 protrude downward of the main portion 41. The fastening member 4 is formed of binder bars of a sufficiently rigid material such as metal. As shown in Fig. 1, each of the battery assemblies 5 includes the fastening members. The fastening members couple the end plates, which are arranged on the end surfaces of the battery assembly 5, to each other. Alternatively, when being arranged in the side-by-side arrangement direction, two battery assemblies 5 may be coupled to each other by two fastening members 4 each of which entirely extends along coplanar side surfaces on one side of both the two battery assemblies 5. In this case, the fastening members 4 also serve to couple the battery assemblies 5 to each other. In this case, the fastening members 4 are fastened to two of the four end plates 3 of the two battery assemblies 5 which are located on the exterior sides, while the fastening members are not fastened to the other two end plates 3, which are opposed to each other. In addition, these two opposed end plates 3 of the two battery assemblies 5 may be integrally formed as one component commonly used for the two battery assemblies 5. In this embodiment, the fastening members are fastened to the end plates by bolts, and the like. However, the fastening structures are not limited to the bolts, and the like.

### (Cover Case 16)

The battery assembly 5 is covered by the cover case 16. As shown in the exploded perspective view of Fig. 5, the battery assembly 5 according to the first embodiment includes the cover case 16, the end plates 3, a waterproof sheet 19, the cooling plate 61, and a thermally conductive sheet 12. The cover case 16 has a rectangular U shape in section which opens the lower surface and the both end surfaces. The end plates 3 cover the both end surfaces of the cover case 16. The waterproof sheet 19 covers the bottom surface of the battery assembly 5. The cooling plate 61 closes the opening of the cover case 16. The thermally conductive sheet 12 is arranged between the cooling plate 61 and the waterproof sheet 19. In this embodiment, the end plates 3 serve as the end surfaces of the cover case 16, in addition to serve to press the battery assembly 5 from the both sides. In addition, a packing member 3b is arranged between the end plate 3 and the end-side battery cell. The packing member 3b is an elastic member such as elastic sheet. The cover case 16 thus covers the battery assembly 5, and airtightly seals the battery assembly 5. Also, the cover case 16 has electrically insulating interior surfaces. Thus, the rectangular battery cells 1 arranged side by side are electrically insulated from each other.

A cover portion 24 is arranged on the upper surface of the cover case 16. The cover portion 24 has slits which allow the terminals of the battery cells to communicate with each other. The bus bars 6 extend along the slits so that the bus bars 6 can electrically connect the adjacent terminals of the battery cells to each other, and the bus bars 6 can be electrically connected to a circuit board. In addition, the cover portion 24 has a sealing material injection opening. Thus, a potting material can be injected after the cover case 16 is closed by the cover portion 24. In the case where a potting material is injected into the cover case, the potting material can fill the gap between the cover portion 24 and the cover case 16, and the gap between the cover portion 24 and the battery assembly 5. Thus, the rectangular battery cells 1 can be covered. As a result, it is possible to prevent condensation on surfaces of the rectangular battery cells 1.

In addition, a gas duct 26 is arranged on the interior surface of the cover portion 24, and communicates with the safety valves of the rectangular battery cells 1. That is, the gas duct 26 is connected to the safety valves of the rectangular battery cells 1. This gas duct 26 is connected to the outside through a pipe or the like. When an internal pressure in the rectangular battery cell 1 rises, gas may be discharged. Even if gas is discharged, the gas can be safely discharged to the outside. In addition, the circuit board is arranged on the upper surface of the cover portion 24. Control circuits for controlling the power supply device 100 are installed on the circuit board. Alternatively, the circuit board may be integrally formed with the cover portion.

In this embodiment shown in Fig. 5, the cover portion 24 is integrally formed with the cover case 16. However, the cover portion and the cover case may be separately formed from each other. Fig. 7 shows a modified embodiment. A cover case 16B shown in Fig. 7 is separately formed from a cover portion 24B. The upper surface of the cover portion 24B is closed by the cover case 16B.

Thus, the battery assembly 5 can be accommodated in the cover case 16. The cover case 16 may be composed of case members which form the wall surfaces of the cover case 16, and are coupled to each other by engaging structures. The engagement parts can be airtightly sealed. The engaging structures can be composed of packing member, O-ring, gasket, or the like for sealing the cover case 16.

### (Hook Portion 16b)

In addition, as shown in the cross-sectional view of Fig. 8, etc., the cover case 16 includes hook portions 16b. The hook portions 16b extend inward of the bottom edges of the cover case 16. When the battery assembly 5 is arranged in the cover case 16, the hook portions 16b extend from the side edges along the bottom surface in corners of the battery assembly 5. Thus, the hook portions 16b hold the bottom surface in both corners of the battery assembly 5. Since the cover case 16 covers the upper surface of the battery assembly 5, the battery assembly 5 is held from the upper and lower sides by the cover case 16. Thus, the top surfaces of the battery cells of the battery assembly 5 can be coplanar with each other. In other words, since the bottom surfaces of the battery cells of the battery assembly 5 are arranged coplanar with each other, the surfaces of the battery cells to be coupled to the cooling plate 61 can be coplanar. As a result, it is possible to improve thermal coupling stability and reliability. In addition, the opening of the cover case 16 bottom surface can serve to hold the waterproof sheet 19 when covered by the waterproof sheet 19.

### (Opening)

The cover case 16 has the opened bottom surface with the opening. The opening is the area which is defined by a pair of hook portions 16b. The opening is dimensioned to be able to be closed by the cooling plate 61. The thermally conductive sheet 12 has an exterior shape which is the same as or slightly smaller than this as the opening. Accordingly, the thermally conductive sheet 12 can be inserted in the opening.

### (Thermally Conductive Sheet 12)

A thermally conductive member such as the thermally conductive sheet 12 is interposed between the battery assembly 5 and the cooling plate 61. The thermally conductive sheet 12 is formed of an excellently electrically insulating and thermally conductive material. In addition, the material preferably has a certain degree of elasticity. Examples of the material can be provided by resins such as acrylic group resin, urethane group resin, epoxy group resin, and silicone group resin. Thus, the battery assembly 5 and the cooling plates 61 are electrically insulated from each other. In the case where the exterior case of the rectangular battery cell 1 and the cooling plate 61 are formed of metal, the exterior case of the rectangular battery cell 1 and the cooling plate 61 are necessarily electrically insulated from each other for preventing that the bottom surface of the rectangular battery cell 1 is electrically conducted to the cooling plate 61. As discussed above, the surfaces of the exterior case can be covered for electric insulation by heat shrinkable tubing, or the like. In addition, in order to improve electric insulation, the electrically insulating thermally conductive sheet 12 is interposed between the battery assembly and the cooling plate. As a result, it is possible to improve the safety and reliability. Thermally conductive paste or the like may be used instead of the thermally conductive sheet. In order to surely provide electric insulation, an additional electrically insulating film may be interposed between the battery assembly and the cooling plate. In addition, cooling pipes can be formed of an electrically insulating material. In the case where electric insulation is sufficiently provided, the thermally conductive sheet, and the like may be omitted.

In the case where the thermally conductive sheet 12 has elasticity, the surface of the thermally conductive sheet 12 can elastically deform, and eliminate gaps between the contact surfaces of the thermally conductive sheet 12 and the battery assembly 5 or the cooling plate 61. As a result, it is possible to improve thermal coupling between the battery assembly 5 and the cooling plate 61.

### (Waterproof Structure)

A waterproof structure is provided between the battery assembly 5 and the cover case 16, which covers the periphery of the battery assembly 5. According to this waterproof structure, it is possible to prevent the entry of moisture and dust from the outside. As a result, it is possible to prevent unintentional electric current flow and corrosion. In addition, it is possible to protect the battery assembly not only against the moisture which enters from the outside but also against water droplets internally produced by condensation, or the like. In particular, in the case where the rectangular battery cells are cooled by using coolant, high cooling performance can be obtained. On the other hand, high cooling performance will bring a cooled part to relatively low temperature, and may bring the cooled part to the dew point. As a result, the moisture in air around the battery assembly is cooled, which in turn may cause condensation on surfaces of the rectangular battery cells. To prevent this, the cover case 16 has the waterproof structure. Specifically, the sealing member 20 is arranged between the coupling surfaces of the cover case 16 and the cooling plate 61, and airtightly seals the cover case 16.

### (Sealing Member 20)

The sealing member 20 is formed of an elastic material. When pressed by the coupling surfaces of the cover case 16 and the cooling plate 61, the sealing member 20 can elastically deform so that this coupling part can be airtightly sealed. Figs. 8 and 9 show this structure. Fig. 9 is the exploded cross-sectional view showing the power supply device shown in Fig. 8. The periphery of the battery assembly 5 is first covered by the cover case 16. The cover case 16 covers the surfaces of the battery assembly 5 except the bottom surface, and composes a waterproof structure.

For example, an O-ring can be used as the sealing member 20. Figs. 10 to 13 show the power supply device using the O-ring. In the illustrated power supply device, the battery assembly 5 shown in Fig. 5, etc., is used. A cooling plate 61 B is a plate with rounded corners. A thermally conductive sheet 12B is arranged on the upper surface of the cooling plate 61 B. The thermally conductive sheet 12B has an exterior shape smaller than the surface of the cooling plate 61 B. Accordingly, a flat stair part 62 is defined on the peripheral part of the upper surface of the cooling plate 61 B around the thermally conductive sheet 12B.

The O-ring sealing member 20 has an inside diameter larger than the exterior shape of the thermally conductive sheet 12B, and surrounds the thermally conductive sheet 12B. In addition, the sealing member 20 is smaller than the exterior shape of the cooling plate 61 B, and is arranged on the stair part 62. Accordingly, as shown in Fig. 12, when arranged on the stair part 62, the sealing member 20 can elastically deform without interference with the thermally conductive sheet 12B, and can seal the coupling part between the bottom surface of the battery assembly 5 and the cooling plate 61 B.

In addition, a groove 17 for leading the sealing member 20 is preferably formed on the bottom surface of the battery assembly 5 opposed to the stair part 62 as shown in Fig. 13. Accordingly, the sealing member 20 can be led to and positioned at the groove 17. In addition, the sealing member 20 can surely elastically deform in the groove 17. Thus, the waterproof structure can be provided between the battery assembly 5 and the cooling plate 61 B.

In this embodiment, it has been described to form the groove 17 in the bottom surface of the battery assembly 5. However, the groove for leading the sealing member may be similarly formed in the cooling plate in addition to or instead of the groove 17.

### SECOND EMBODIMENT

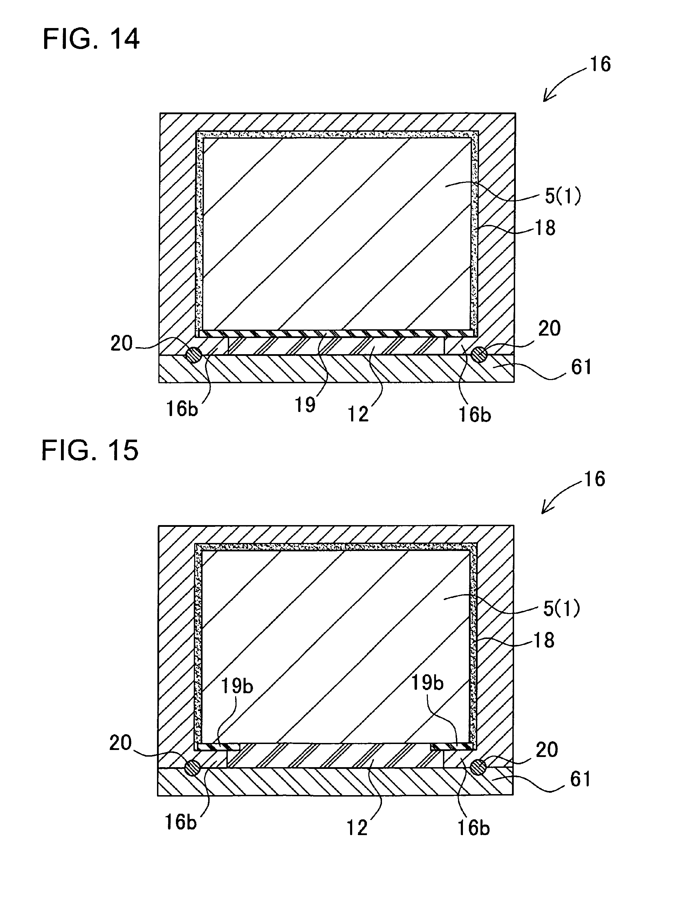

As discussed above, the battery assembly 5 can be airtightly closed by the cover case and the cooling plate whereby preventing air from flowing into the cover case. Therefore, it is possible to prevent the moisture in air from condensing in the cover case. In addition to the waterproof structure which prevents the entry of water from the surface side into the interior side of the cover case, in order to protect the surfaces of the battery assembly accommodated in the cover case against water droplets, and the like, a sealing layer can cover the surfaces of the battery assembly so that gaps between the battery assembly and the cover case can be filled with the sealing layer. Fig. 14 is a cross-sectional view showing a power supply device according to a second embodiment to which this feature is adopted. In this illustrated power supply device, a sealing layer 18 is arranged between the battery assembly 5 and the cover case 16. That is, gaps between the battery assembly 5 and the cover case 16 are filled the sealing material so that the sealing layer 18 is formed whereby preventing inverse effects on the battery assembly 5 by condensation of moisture in air in the gaps.

### (Sealing Layer 18)

A sealing material as the sealing layer 18 covers the periphery of the battery assembly 5 in the second embodiment. In order to hold the sealing material on the surfaces of the battery assembly 5, the periphery of the battery assembly 5 is surrounded by the cover case 16. Gaps between the battery assembly 5 and the cover case 16 are filled with the sealing material. Thus, the gaps between the battery assembly 5 and the cover case 16 can be eliminated. As a result, it is possible to prevent inverse effects on the battery assembly 5 by condensation on the surfaces of the battery assembly 5. In the second embodiment, in order to provide the waterproof structure of the end plates 3 and the cover case 16, after the fastening members 4 are fastened to the end plates 3, gaps between the battery assembly 5 and the end plates 3 or the cover case 16 is filled with the sealing material as the sealing layer 18. Thus, the waterproof structure can be provided which protects the periphery of the battery assembly 5 against water.

### (Sealing Material)

Potting materials can be used as the sealing material to seal the gaps. Urethane group resins can be suitably used as the potting materials. Thus, the gaps are filled with the sealing material whereby eliminating the gaps. As a result, the surface of the rectangular battery cell 1 can be protected. Therefore, it is possible to prevent electric current flow and corrosion caused by condensation. In order that the sealing material may spread over the gaps, and that bubbles may not be produced, it is preferable to reduce a pressure in the cover case 16, in other words, to form a negative pressure in the cover case 16 when the gaps are filled with the sealing material. Conversely, the sealing material may be pressurized to seal the gaps. After injected into the cover case, the sealing material is dried until the sealing material is completely cured. In the cases where the cover case 16 is formed of resin, and the sealing material is formed of the same group resin as the cover case 16, it is possible to increase the adhesive strength between the cover case 16 and the sealing material after the sealing material is cured.

### (Water-Absorbing Sheet)

In addition to the sealing material, a water-absorbing sheet can be used as the sealing layer 18. The water-absorbing sheet is a sheet material which is formed of a hygroscopic and water-absorbing polymer material, or the like. This water-absorbing sheet can more surely prevent condensation. The waterproof structure according to the present invention is not limited to this. A sealing structure may be used such as packing member, O-ring, and gasket. Sheet-shape elastic members or other potting materials may be used. Alternatively, the battery assembly may be accommodated in a waterproof bag. Any suitable structures can be used as the waterproof structure.

### (Waterproof Sheet 19)

The bottom surface of the cover case 16 is opened. For this reason, a part of the battery assembly 5 corresponding to this opened part (opening) cannot be covered by the cover case 16. Accordingly, the waterproof sheet 19 is arranged which covers this opened surface part. The waterproof sheet 19 is arranged to cover the bottom surface of the battery assembly 5, as shown in the perspective view of Fig. 4, and is fastened onto the battery assembly 5 in this arrangement. When the waterproof sheet 19 is fastened to the battery assembly, an adhesive is applied to the coupling surfaces of the waterproof sheet 19 and the battery assembly 5, for example. The waterproof sheet can be also fastened to the hook portions 16b of the cover case 16. In particular, when the sealing layer 18 is injected into and fastened in gaps between the battery assembly 5 and the cover case 16, the waterproof sheet 19 can be also fastened onto the battery assembly 5. After the sealing layer 18 is injected to seal the gaps, this cured sealing layer 18 facilitates to securely fasten the edges of the waterproof sheet 19 to the battery assembly 5 or the cover case 16. In addition, gaps between the waterproof sheet 19 and the cover case 16 are filled with the sealing layer 18. As a result, this waterproof structure can prevent the entry of water through the gaps between the waterproof sheet 19 and the cover case 16.

An excellently waterproof resin sheet can be used as the waterproof sheet 19. For example, PET, PEV, PP, and the like can be used as the material of the resin sheet. Since heat is conducted from the battery assembly 5 to the cooling plate 61 through the waterproof sheet, the waterproof sheet is preferably formed of an excellently thermally conductive material. In addition, it is necessary to eclectically insulate the battery cells of the battery assembly 5 from each other. For this reason, the waterproof sheet is also required to be excellent in electric insulation. In addition, in order to avoid damage even if the battery cells generate heat, the waterproof sheet is also required to be excellent in heat resistance. Acrylic group materials and the like can be suitably used as the waterproof sheet 19 which has these characteristics.

It has been described to attach the waterproof sheet onto the bottom surface of the battery assembly 5 in the power supply device according to the foregoing first embodiment shown in Fig. 9. However, the present invention is not limited to this. For example, even in the case where the waterproof sheet is omitted, the thermally conductive sheet can be directly pressed onto the bottom surface of the battery assembly. In this case, the battery cells in the bottom surface of the battery assembly can be electrically insulated from each other, while gaps between coupling surfaces are less likely to be produced so that the thermal coupling effect can be improved between the battery assembly and the cooling plate 61. The waterproof sheet is not used in the power supply device shown in Figs. 10 to 13.

### THIRD EMBODIMENT

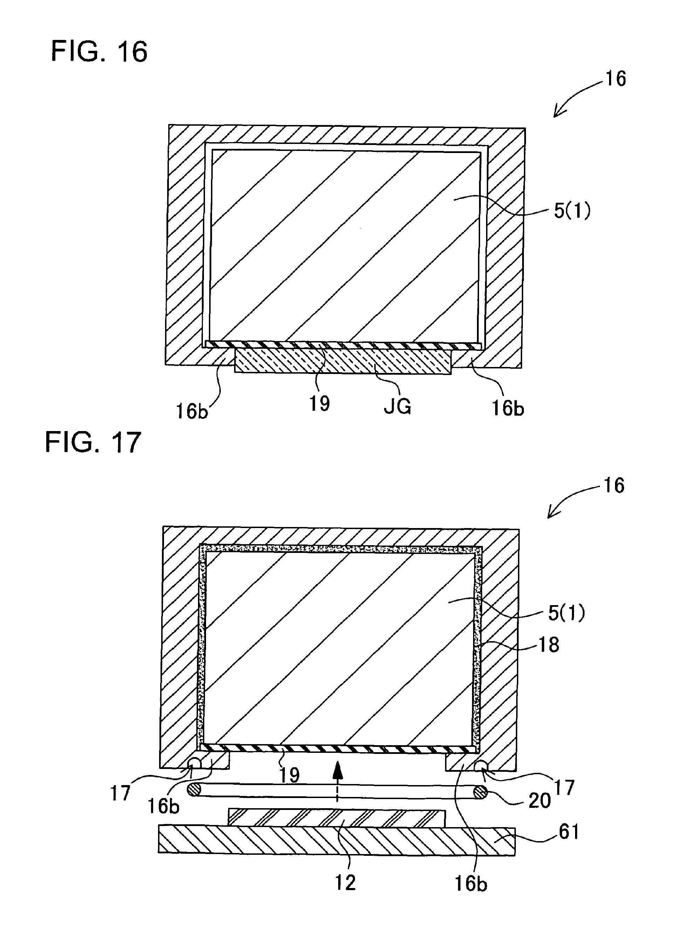

The waterproof sheet 19 can be partially cut out so that the thermally conductive sheet 12 is partially brought into direct contact with the battery assembly 5. Fig. 15 shows this type of power supply device according to a third embodiment. In this illustrated battery assembly 5, after the sealing material is cured, the waterproof sheet 19 for covering the bottom surface of the battery assembly 5 is partially cut out and is removed shown in Fig. 17. A part of the bottom surface of the battery assembly 5 is exposed correspondingly to the removed part of the waterproof sheet 19. The thermally conductive sheet 12 is pressed onto this exposed surface so that the thermally conductive sheet 12 is brought into direct intimate contact with the battery assembly 5 whereby reducing thermal resistance. As a result, it is expected that the cooling effect by the cooling plate 61 can be improved. After the sealing material is cured, the surface of the battery assembly 5 has been sealed except for the exposed part. When the exposed part is completely covered by the thermally conductive sheet 12, a waterproof structure can be provided. For this reason, it is preferable that the removed part of the waterproof sheet 19 be smaller than the area of the thermally conductive sheet 12. After the removal, the remaining part of the waterproof sheet 19b and the hook portion 16b can airtightly seal the battery assembly. Thus, after the waterproof sheet 19 is removed, the exposed area of the bottom surface of the battery assembly 5 can be completely covered by the thermally conductive sheet 12.

### (Injection of Sealing Material)

The following description will describe the procedure of injection of the sealing material with reference to cross-sectional views of Figs. 16 and 17. As shown in Figs. 16 and 17, after the periphery of the battery assembly 5 is covered by the cover case 16, the waterproof sheet 19 is arranged in the opened part of the bottom surface of the cover case 16. In this embodiment, the waterproof sheet 19 is supported by an assembly jig JG for fastening the waterproof sheet. The assembly jig JG is dimensioned substantially the same as or slightly smaller than the opened part. The waterproof sheet 19 is inserted through the opened part, and pressed onto the bottom surface of the battery assembly 5.

Gaps between the surface of the battery assembly 5 and the interior surface of the cover case 16 are filled with the sealing material with the waterproof sheet 19 being pressed by the assembly jig JG. The sealing material is injected through the sealing material injection opening, which is previously opened in the cover case 16, for example. After the sealing material is cured, the assembly jig JG is removed so that the opened part of the bottom surface of the cover case is opened. After the sealing material is cured, the sealing layer 18 is formed which can eliminate gaps between the exterior surface of the battery assembly 5 and the interior surface of the cover case 16. Subsequently, as shown in Fig. 17, the thermally conductive sheet 12 is inserted into the opened part. After that, the cooling plate 61 is fastened to the battery assembly 5 with the bottom surface of the thermally conductive sheet 12 being pressed by the cooling plate 61. Thus, the cooling plate 61 can be thermally connected to the bottom surface of the battery assembly 5 through the thermally conductive sheet 12 and the waterproof sheet 19. The battery assembly 5 can be cooled by heat exchange through this bottom surface of the battery assembly 5. As discussed above, the waterproof sheet 19 can be partially removed if necessary before the thermally conductive sheet 12 is fastened.

As discussed above, in this embodiment, in order that the cooling plate 61 can be thermally connected to the bottom surface of the battery assembly 5, the bottom surface of the cover case 16 is opened. However, the present invention is not limited to this. For example, a surface of the cover case may be opened which is opposed to the side surface or top surface of the battery assembly so that the side surface or top surface of the battery assembly may be thermally connected to the cooling plate through this opened part of the cover case. Generally, terminals of the battery cells are arranged on the top surfaces of the battery cells. For this reason, the cooling plate is preferably arranged on a surface of the battery assembly other than the terminal-arranged surface.

### FOURTH EMBODIMENT

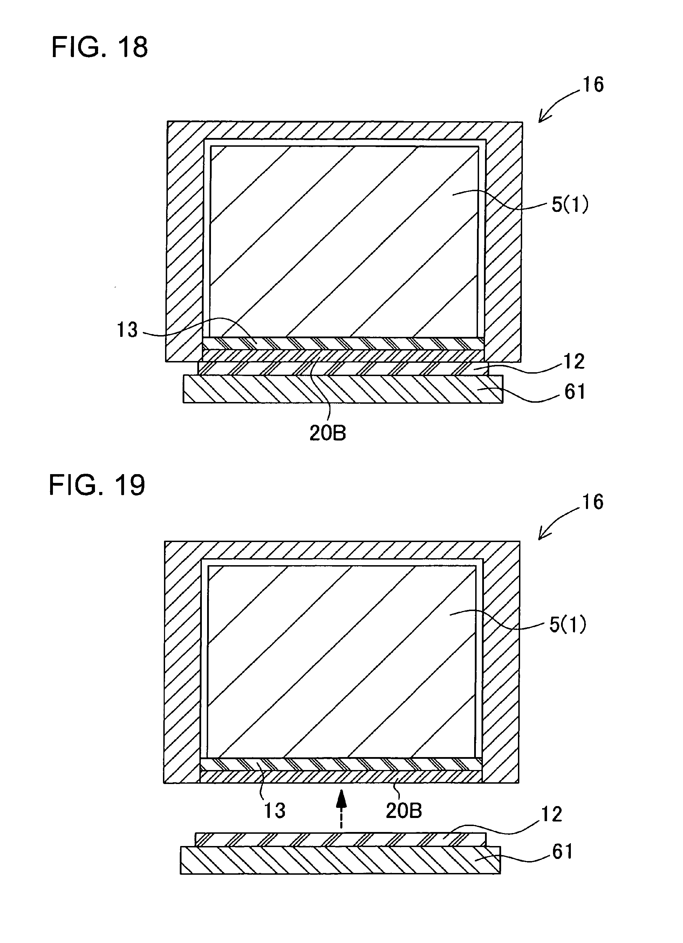

The sealing member is not limited to the O-ring, and can be any suitable sealing structure which can seal the gap between the coupling surfaces of the cover case 16 and the cooling plate 61. The waterproof sheet may be omitted. In this case, the periphery of the battery assembly 5 can be previously covered by a complete waterproof cover. After that, the thermally conductive sheet 12 and the cooling plate 61 are fastened onto the battery assembly 5. For example, the opening of the cover case 16 is previously physically covered and brought in a sealed state by a sealing plate 20B. Figs. 18 and 19 show a waterproof structure according to a fourth embodiment which includes the sealing plate 20B. In the illustrated power supply device, the sealing plate 20B as a sealing member is interposed between the thermally conductive sheet 12 and the battery assembly 5.

### (Sealing Plate 20B)

The sealing plate 20B is airtightly fastened to the cover case 16 so that the opening of the cover case 16 is airtightly closed. Metal plates can be suitably used as the sealing plate 20B. For example, a thin aluminum sheet can be used as the sealing plate 20B, and is fastened to the bottom surface of the cover case 16 by adhesion, welding, and other methods. The sealing plate 20B has a size and an exterior shape capable of surely closing the opening of the cover case 16. The size and the exterior shape of the sealing plate 20B are designed to match with the opening of the cover case 16. Thus, the bottom surface of the cover case 16 can be physically airtightly closed. In addition, as shown in Fig. 19, the cooling plate 61 is fastened to the exterior-side surface of the sealing plate 20B with the thermally conductive sheet 12 being interposed between the cooling plate 61 and the sealing plate 20B. The heat is transferred from the battery assembly 5 to the cooling plate 61 through thermal conduction. According to this construction, the member for airtightly closing the cover case 16 can be separately provided from the member for cooling the battery assembly 5. For this reason, suitable materials and suitable coupling structures can be selected for these members. As a result, these members can separately preform the sealing function and the cooling function. Therefore, there are advantages in structure and manufacturing.

### (Second Thermally Conductive Sheet 13)

In order to improve the thermal coupling between the sealing plate 20B and the battery assembly 5, an elastic, second thermally conductive sheet 13 can be interposed between the sealing plate 20B and the bottom surface of the battery assembly 5 in the cover case 16. In the case where the metal sealing plate 20B is used, even if the bottom surfaces of the exterior cases of the battery cells are unevenly arranged, the elastic, second thermally conductive sheet 13 interposed between the metal sealing plate 20B and the battery cells can eliminate unstable thermal coupling. As a result, heat can be stably transferred between the metal sealing plate 20B and the battery cells.

### (Fastening Structure)

The battery assembly 5 and the cooling plate 61 include the fastening structures for fastening the battery assembly 5 to the cooling plate 61. As shown in Figs. 2 to 5, the fastening structures include the fastening connector parts 44, and plate connector parts. The fastening connector parts 44 are arranged on and protrude from the lower edge of the main portion 41 of the fastening member 4. The plate connector parts are arranged in the cooling plate 61. A plurality of fastening connector parts 44 are spaced away from each other. In the power supply device shown in Fig. 2, three fastening connector parts are arranged at the both ends and the midpoint on the lower edge of the main portion 41.

### (Interlocking Protrusion)

In the power supply device shown in Figs. 3 and 4, the fastening connector part 44 is an interlocking protrusion which is bent in a hook shape. The end of the hook-shaped the interlocking protrusion protrudes outward of the battery assembly 5.

### (Plate Connector Part)

The cooling plate 61 includes the plate connector parts as fastening mechanism to be fastened to the fastening connector parts 44. The plate connector parts are arranged at the positions on the cooling plate corresponding to the fastening connector parts 44. In the power supply device shown in Fig. 5, the plate connector parts are coupling bars 50 having interlocking slots 51 into which the interlock protrusion can be inserted. Thus, the fastening members 4 can be easily fastened to the cooling plate 61 by interlocking the hook-shaped interlocking protrusions with the interlock slots 51.

### (Coupling Bar 50)

As shown in the exploded perspective view of Fig. 5, the coupling bar 50 is a strip which is bent in a roughly rectangular U shape as viewed in section. The strip is formed from a sufficiently rigid metal band. In the power supply device shown in Fig. 5, the strip has a stepped part for increasing the rigidity. The coupling bar 50 has a length corresponding to the width of the bottom surface of the cooling plate 61 so that the bottom surface of the cooling plate 61 can be sandwiched between the ends of the rectangular U-shaped bent part. The interlock slots 51 are opened as the plate connector parts on the ends of the coupling bar 50. In the case where the coupling bars 50 are thus used, the plate connector parts can be easily additionally provided to the cooling plate 61. In particular, the connection mechanism can be added without complicating the shape of the cooling plate 61 which includes the coolant circulation function, and the like.

### (Coolant-Circulating Mechanism)

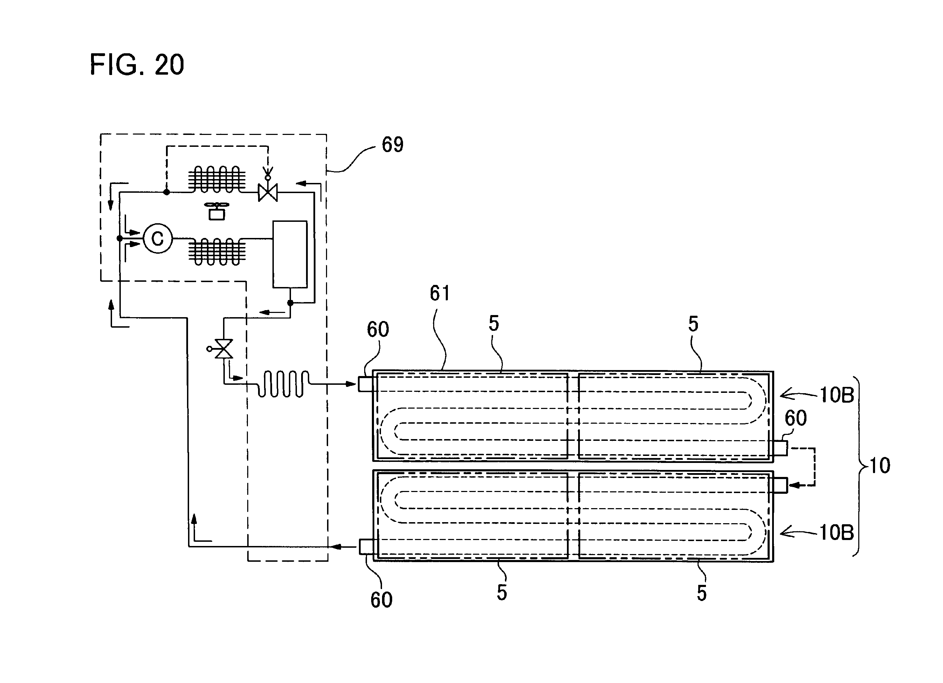

A coolant-circulating mechanism is arranged inside the cooling plate 61. Fig. 20 shows an exemplary coolant-circulating mechanism. The battery assembly 5 includes a plurality of rectangular battery cells 1, which are arranged side by side in the battery pack 10 shown in Fig. 20. The battery assemblies 5 are arranged on the upper surfaces of the cooling plates 61. This cooling plate 61 is thermally connected to the rectangular battery cells 1 of the battery assemblies 5. The cooling plates 61 include coolant pipes. The coolant pipes are connected to a cooling mechanism 69. In this battery pack 10, the battery assemblies 5 are in contact with the cooling plate 61, and can be directly and effectively cooled by the cooling plate 61. The cooling plate may cool not only the battery assemblies but also members which are arranged on end surfaces of the battery assemblies, for example. Thus, the cover case 16 is in contact with the cooling plate 61, which includes the cooling pipe 60 for circulating coolant. Accordingly, it is possible to provide a high cooling effect. Therefore, even a high output power supply device can stably operate.

### (Cooling Plate 61)

The cooling plate 61 is a cooling member for transferring heat from the rectangular battery cells 1 to the outside. In the battery pack shown in Fig. 20, the coolant pipe is arranged inside the cooling plate 61. Cooling plate 61 includes the cooling pipe 60 as heat exchanger, which is the coolant pipe formed of copper, aluminum, or the like. Liquefied coolant as cooling fluid circulates through the cooling pipes 60. The cooling pipes 60 are thermally connected to an upper plate portion of the cooling plate 61. A thermally insulating material is arranged between the cooling pipes 60 and a bottom plate portion of the cooling plate 61 so that the cooling pipe 60 is thermally insulated from the bottom plate portion. Thus, the cooling plate 61 has the cooling feature. However, the cooling plate may be composed of only a metal plate. For example, the cooling plate may be a metal plate, or the like, which has radiating fins or other shapes with high heat dissipating or transferring affects. The cooling plate according to the present invention is not limited to this. The cooling plate may include an electrically insulating but thermally conductive sheet.

The cooling fluid is provided from the cooling mechanism 69 to the coolant pipes, which extend inside the cooling plate 61, so that the cooling plate 61 is cooled. When the cooling fluid as the coolant is provided from the cooling mechanism 69 to the cooling plate 61, the cooling fluid can be evaporated inside the coolant pipe so that the cooling plate 61 can be efficiently cooled by the heat of evaporation.

The battery pack shown in Fig. 20 includes two cooling plates 61. Two battery assemblies 5 are placed on each of the cooling plates 61. As discussed above, two battery assemblies 5 are arranged in the longitudinal direction (i.e., in the side-by-side arrangement direction of rectangular battery cells 1, which are arranged side by side), and are coupled to each other so that a linearly coupled battery assembly unit 10B is provided. One cooling plate 61 supports two battery assemblies 10 that are linearly coupled to each other. Two linearly coupled battery assembly units 10B are arranged in parallel to each other so that the battery pack 10 is provided.

In the battery pack shown in Fig. 20, the cooling plate 61 extends in the side-by-side arrangement direction of the rectangular battery cells 1. The cooling pipe 60 is bent at the ends of the cooling plate into a serpentine shape so that three straight parts of the cooling pipe 60 extend under the two battery assemblies 5. The cooling pipes 60 of the two linearly coupled battery assembly units 10B are connected to each other, and form a common coolant-circulating path. In the case where a plurality of battery assemblies 5 are arranged on and cooled by one cooling plate 61, these battery assemblies 5 can be commonly cooled by the cooling mechanism. Accordingly, these battery assemblies 5 can be commonly attached to one cooling plate 61. As a result, it is possible to commonly provide the cooling plate 61 to a plurality of battery assemblies, and to inexpensively and simply provide the cooling mechanism. It is noted that a plurality of cooling pipes may be arranged under the lower surface of the battery assemblies in one cooling plate. For example, the bent parts of aforementioned serpentine cooling pipe may be removed so that a plurality of cooling pipes are provided. In this case, since the bent parts can be eliminated, the weight of the cooling plate will be reduced. In this case, the plurality of cooling pipes can be connected to each other, and form a common coolant-circulating path. The arrangement and the shape of the cooling pipe can be suitably modified.

In addition, the cooling plate 61 serves as a means for reducing unevenness of temperatures on the plurality of rectangular battery cells 1. That is, the cooling plate 61 can be adjusted to absorb heat energy from the rectangular battery cells 1 so that the cooling plate 61 cools high temperature rectangular battery cells (e.g., rectangular battery cell in the central part) by a relatively large degree, while the cooling plate 61 cools low temperature rectangular battery cells (e.g., rectangular battery cell in the both end parts) by a relatively small degree. Thus, the cooling plate 61 can reduce temperature difference between the rectangular battery cells 1. As a result, it is possible to reduce unevenness of temperatures on the rectangular battery cells. Therefore, it is possible to prevent that some of the rectangular battery cells 1 deteriorate relatively larger, and are brought into an overcharged or over-discharged state.

Although the cooling plate 61 is arranged under the bottom surface of the battery assemblies 5 in the battery pack shown in Fig. 20, the present invention is not limited to this. For example, the cooling plates may be arranged on the both side surfaces of the rectangular battery cells. Alternatively, the cooling plate may be arranged on only one of the both side surfaces of the rectangular battery cells.

### (Cooling Pipe 60)

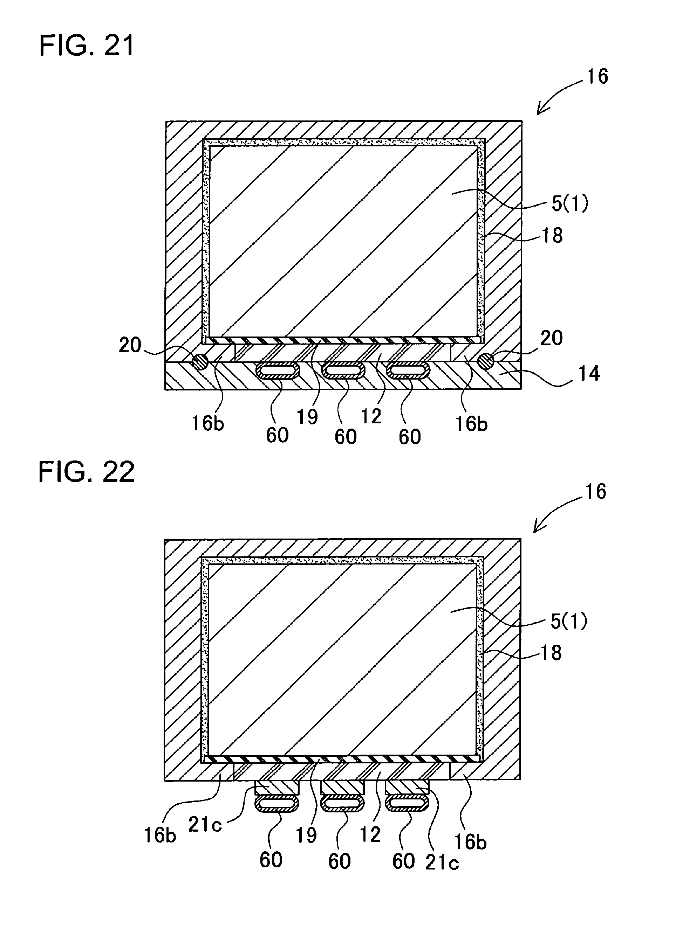

The cooling pipe 60 for coolant circulation can be directly arranged on the lower surface of the battery assemblies 5 without using a metal plate such as the cooling plate. Fig. 21 is a schematic cross-sectional view showing this type of power supply device according to a fifth embodiment. As shown in Fig. 21, a plurality of cooling pipes 60 are arranged on the lower surface of the cover case 16, which accommodates the battery assembly 5. Furthermore, the cooling pipes 60 are embedded in a thermally insulating member 14. The thermally insulating member eliminates an air layer around the cooling pipe 60. Thus, the thermally insulating member thermally insulates the cooling pipe 60. As a result, the cooling effect by the cooling pipe 60 can be high. Since the cooling effect can be high, it is not always necessary to arrange a number of cooling pipes on the bottom surface of the battery assembly dissimilar to conventional power supply devices. Accordingly, two or three cooling pipes can have sufficient cooling effect. As a result, the cooling mechanism can be simplified. Therefore, it is possible to reduce the weight of the power supply device according to this embodiment. In addition, according to this embodiment, the cooling pipe for coolant circulation can be in direct contact with and directly cool the battery assembly 5 without a metal plate such as the cooling plate interposed between the cooling pipe and the battery assembly 5. As a result, it is possible to reduce the thickness, weight and size of the power supply device according to this embodiment.

As shown in Fig. 21, the cooling pipe 60 has an oval shape having a flat surface opposed to the battery assembly 5. According to this oval shape, the contact area between the rectangular battery cell 1 and the cooling pipe according to this embodiment can be increased as compared with cylindrical cooling pipes. As a result, it is possible to ensure that the cooling pipe according to this embodiment thermally connected to the battery assembly 5. The cooling pipe 60 is formed of an excellently thermally conductive material. Specifically, the cooling pipe 60 is formed of metal such as aluminum. In particular, in the case where the cooling pipe is a relatively flexible aluminum pipe, when the cooling pipe is pressed toward the battery assembly 5 in the contact coupling surface, this contact surface can slightly be deformed. Accordingly, it is possible improve the contact state of the cooling pipe with the battery assembly 5. As a result, it is possible provide high heat transferring effect from the battery assembly 5 to the cooling pipe.

### (Thermally Insulating Member 14)

In the power supply device shown in Fig. 21, the space between the cooling pipes 60 is filled with the thermally insulating member 14. The thermally insulating member 14 can be formed of a thermally insulating resin. For example, the thermally insulating member 14 can be suitably formed of a urethane group resin, or the like. In this embodiment, as shown in Fig. 21, the thermally insulating resin is formed by potting to cover the periphery of the cooling pipe 60. Thus, the cooling pipe 60 and the bottom surface of the battery assembly 5 can be surely covered by potting. As a result, it is possible to prevent condensation. Therefore, it is possible to improve the safety.

In the power supply device shown in Fig. 21, the cooling pipes 60 are thermally coupled to the bottom surface of the battery assembly 5 through the thermally conductive sheet 12, while the space between the cooling pipes 60 and the space under the lower surface of the cooling pipe 60 are filled with the thermally insulating member 14. However, in the case where space above the upper surface of the cooling pipe 60 is also filled with the thermally insulating member 14, the upper surface of the cooling pipe 60 can be electrically insulated. As a result, it is possible to omit the thermally conductive sheet arranged between the cooling pipes 60 and the rectangular battery cells 1.

In the power supply device shown in Fig. 21, the cover case 16 has been described to have a box shape having an opened lower surface and a closed upper surface. However, the cover case may have a bottom closed box shape having a closed lower surface and an opened upper surface as stated above. The cooling plate can be a uniform metal plate. Alternatively, one or more strip-shaped metal plate may be partially embedded by insert molding. In this case, as shown in a cross-sectional view of Fig. 22 showing a power supply device according to a sixth embodiment, the cooling plate is constructed so that metal plates 21c are arranged at the positions corresponding to the cooling pipes 60. According to this construction, it is possible to improve the thermally coupling effect between the metal plates 21 c and the cooling pipes 60.

As discussed above, the power supply device 100 according to the first embodiment seals the battery assembly 5 so that a waterproof structure is provided. As a result, the rectangular battery cells 1 are protected against condensation, and the like. According to this construction, the interior space can be formed by the cover case 16 and the end plates 3, and can be filled with the sealing layer 18 by potting, or the like. Thus, this interior space can be sealed. In addition, since the end plate 3 is located outside, the power supply device can be easily secured to an exterior case, a frame, or the like. In addition, since the fastening members 4 are located on the exterior sides of the cover case 16, a fastening structure for fastening the cooling plate 61 can be small.

In the case where the cover case is formed of a metal, or the like, having sufficient rigidity, the end plates 3 can be fastened to the cover case so that the battery assembly is tightly held. According to this construction, since the cover case can also serve as the fastening members, the power supply device can be smaller.

The aforementioned power supply devices can be used as a power supply for vehicles. The power supply device can be installed on electric vehicles such as hybrid cars that are driven by both an internal-combustion engine and an electric motor, and electric vehicles that are driven only by an electric motor. The power supply device can be used as a power supply device for these types of vehicles.

### (Hybrid Car Power Supply Device)

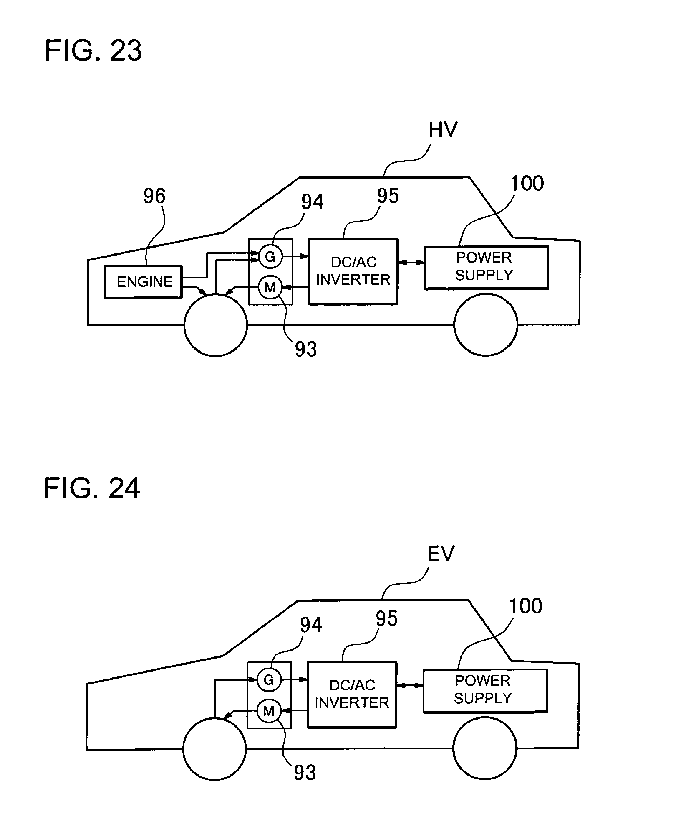

Fig. 23 is a block diagram showing an exemplary hybrid car that is driven both by an engine and an electric motor, and includes the power supply device. The illustrated vehicle HV with the power supply device includes an electric motor 93 and an internal-combustion engine 96 that drive the vehicle HV, a power supply device 100 that supplies electric power to the electric motor 93, and an electric generator 94 that charges batteries of the power supply device 100. The power supply device 100 is connected to the electric motor 93 and the electric generator 94 via a DC/AC inverter 95. The vehicle HV is driven both by the electric motor 93 and the internal-combustion engine 96 with the batteries of the power supply device 100 being charged/discharged. The electric motor 93 is energized with electric power and drives the vehicle in a poor engine efficiency range, e.g., in acceleration or in a low speed range. The electric motor 93 is energized by electric power that is supplied from the power supply device 100. The electric generator 94 is driven by the engine 96 or by regenerative braking when users brake the vehicle so that the batteries of the power supply device 100 are charged.

### (Electric Vehicle Power Supply Device)

Fig. 24 shows an exemplary electric vehicle that is driven only by an electric motor, and includes the power supply device. The illustrated vehicle EV with the power supply device includes the electric motor 93, which drives the vehicle EV, the power supply device 100, which supplies electric power to the electric motor 93, and the electric generator 94, which charges batteries of the power supply device 100. The electric motor 93 is energized by electric power that is supplied from the power supply device 100. The electric generator 94 can be driven by vehicle EV regenerative braking so that the batteries of the power supply device 100 are charged.

### (Power Storage Type Power Supply Device)

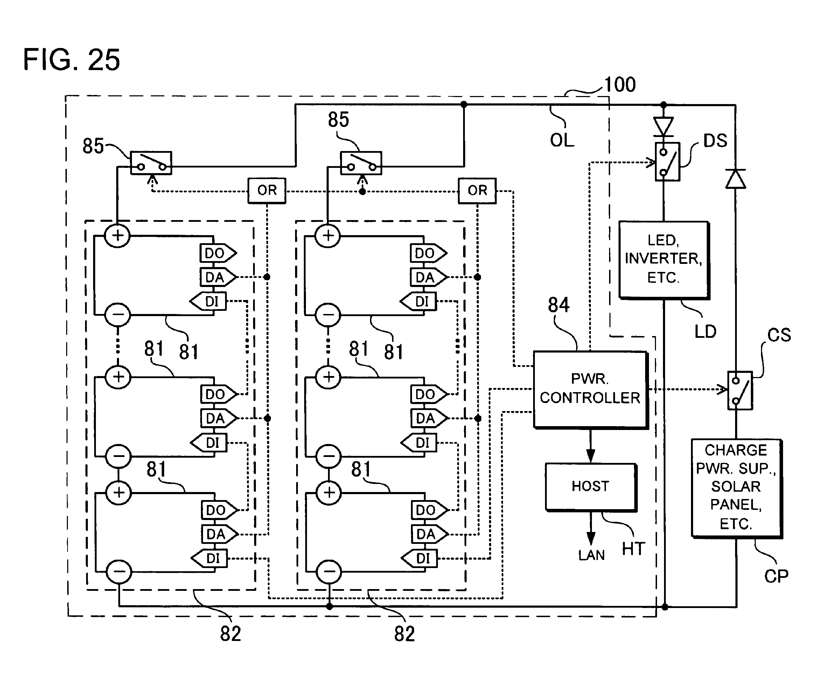

The power supply device can be used not only as power supply of mobile unit but also as stationary power storage. For example, examples of stationary power storage devices can be provided by an electric power system for home use or plant use that is charged with sunlight or with midnight electric power and is discharged when necessary, a power supply for street lights that is charged with sunlight during the daytime and is discharged during the nighttime, or a backup power supply for signal lights that drives signal lights in the event of a power failure. Fig. 25 shows an exemplary circuit diagram. This illustrated power supply device 100 includes battery units 82 each of which includes a plurality of battery packs 81 that are connected to each other. In each of battery packs 81, a plurality of rectangular battery cells 1 are connected to each other in serial and/or in parallel. The battery packs 81 are controlled by a power supply controller 84. In this power supply device 100, after the battery units 82 are charged by a charging power supply CP, the power supply device 100 drives a load LD. The power supply device 100 has a charging mode and a discharging mode. The Load LD and the charging power supply CP are connected to the power supply device 100 through a discharging switch DS and a charging switch CS, respectively. The discharging switch DS and the charging operation switch CS are turned ON/OFF by the power supply controller 84 of the power supply device 100. In the charging mode, the power supply controller 84 turns the charging operation switch CS ON, and turns the discharging switch DS OFF so that the power supply device 100 can be charged by the charging power supply CP. When the charging operation is completed so that the battery units are fully charged or when the battery units are charged to a capacity not lower than a predetermined value, if the load LD requests electric power, the power supply controller 84 turns the charging operation switch CS OFF, and turns the discharging switch DS ON. Thus, operation is switched from the charging mode to the discharging mode so that the power supply device 100 can be discharged to supply power to the load LD. In addition, if necessary, the charging operation switch CS may be turned ON, while the discharging switch DS may be turned ON so that the load LD can be supplied with electric power while the power supply device 100 can be charged.

The load LD driven by the power supply device 100 is connected to the power supply device 100 through the discharging switch DS. In the discharging mode of the power supply device 100, the power supply controller 84 turns the discharging switch DS ON so that the power supply device 100 is connected to the load LD. Thus, the load LD is driven with electric power from the power supply device 100. Switching elements such as FET can be used as the discharging switch DS. The discharging switch DS is turned ON/OFF by the power supply controller 84 of the power supply device 100. The power supply controller 84 includes a communication interface for communicating with an external device. In the exemplary power supply device shown in Fig. 25, the power supply controller is connected to a host device HT based on existing communications protocols such as UART and RS-232C. Also, the power supply device may include a user interface that allows users to operate the electric power system if necessary.

Each of the battery packs 81 includes signal terminals and power supply terminals. The signal terminals include a pack input/output terminal DI, a pack abnormality output terminal DA, and a pack connection terminal DO. The pack input/output terminal DI serves as a terminal for providing/receiving signals to/from other battery packs and the power supply controller 84. The pack connection terminal DO serves as a terminal for providing/receiving signals to/from other battery packs as slave packs. The pack abnormality output terminal DA serves as a terminal for providing an abnormality signal of the battery pack to the outside. Also, the power supply terminal is a terminal for connecting one of the battery packs 81 to another battery pack in series or in parallel. In addition, the battery units 82 are connected to an output line OL through parallel connection switches 85, and are connected in parallel to each other.

### Industrial Applicability

A power supply device according to the present invention can be suitably used as power supply devices of plug-in hybrid vehicles and hybrid electric vehicles that can switch between the EV drive mode and the HEV drive mode, electric vehicles, and the like. A vehicle including this power supply device according to the present invention can be suitably used as plug-in hybrid vehicles, hybrid electric vehicles, electric vehicles, and the like. Also, a power supply device according to the present invention can be suitably used as backup power supply devices that can be installed on a rack of a computer server, backup power supply devices for wireless communication base stations, electric power storages for home use or plant use, electric power storage devices such as electric power storages for street lights connected to solar cells, backup power supplies for signal lights, and the like.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. A power supply device comprising:
a battery assembly (5) that includes a plurality of rectangular battery cells arranged side by side;
a cover case (16) that has a box shape having one opened surface with opening, said battery assembly (5) being covered with surfaces of the cover case (16) other than said opening; and
a cooling plate (61) that closes said one opened surface of said covering case (16), and is arranged to be thermally coupled to said battery assembly (5), coolant flowing through the cooling plate (61) whereby transferring heat from said battery assembly (5) to the coolant,
**characterized in that** said power supply device further comprises a sealing member (20) that is arranged between said covering case (16) and said cooling plate (61) whereby sealing said covering case (16).

2. The power supply device according to claim 1 further comprising a thermally conductive sheet (12) that is an electrically insulating but thermally conductive sheet interposed between said cooling plate (61) and said battery assembly (5).

3. The power supply device according to claim 2, wherein said sealing member (20) is an elastic member, wherein said sealing member (20) can be elastically deformed by press force when being sandwiched between said cooling plate (61) and said cover case (16).

4. The power supply device according to claim 3, wherein said sealing member (20) has a closed loop shape, wherein the closed loop shape is larger than the exterior shape of said thermally conductive sheet (12).

5. The power supply device according to claim 4, wherein the closed loop shape of said sealing member (20) is smaller than the exterior shape of said cooling plate (61).

6. The power supply device according to any of claims 2 to 5, wherein the exterior shape of said thermally conductive sheet (12) is smaller than the surface of said cooling plate (61),
wherein when said thermally conductive sheet (12) is placed on the upper surface of said cooling plate (61), a stair part (62) is formed on the peripheral part of the upper surface of said cooling plate (61) around said thermally conductive sheet (12),
wherein said sealing member (20) is arranged on said stair part (62).

7. The power supply device according to claim 6, wherein a groove (17) is formed on at least one of said stair part (62) and a part of the cover case (16) to be arranged on this stair part (62), and holds said elastic member.

8. The power supply device according to any of claims 1 to 7, wherein said sealing member (20) is an O-ring.

9. The power supply device according to claim 1, wherein said sealing member (20) is a sealing plate (20B) that is interposed between said thermally conductive sheet (12) and said battery assembly (5),
wherein said sealing plate (20B) is airtightly fastened to said cover case (16) so that the opening of said cover case (16) is airtightly closed,
wherein said cooling plate (61) is fastened to the exterior-side surface of said sealing plate (20B) with said thermally conductive sheet (12) being interposed between said cooling plate (61) and said sealing plate (20B).

10. The power supply device according to claim 9 further comprising a second thermally conductive sheet (13) that is an elastic sheet interposed between said sealing plate (20B) and one surface of said battery assembly (5).

11. The power supply device according to claim 9 or 10, wherein the size and the exterior shape of said sealing plate (20B) are designed to match with the opening of said cover case (16).

12. The power supply device according to any of claims 9 to 11, wherein said sealing plate (20B) is a metal plate.

13. The power supply device according to any of claims 1 to 12, wherein gaps between said battery assembly (5) and said cover case (16) are filled with a sealing material.

14. A vehicle comprising the power supply device according to any of claims 1 to 13.
